(19) **Europäisches Patentamt**
**European Patent Office**
**Office européen des brevets**

(11) **EP 3 178 863 B1**

(12) **EUROPÄISCHE PATENTSCHRIFT**

(45) Veröffentlichungstag und Bekanntmachung des Hinweises auf die Patenterteilung:
**28.08.2019 Patentblatt 2019/35**

(51) Int Cl.:
*C08J 5/04* (2006.01)       *C08G 59/50* (2006.01)
*C08J 5/24* (2006.01)       *C08G 59/56* (2006.01)

(21) Anmeldenummer: **16201591.1**

(22) Anmeldetag: **01.12.2016**

(54) **EPOXIDHARZ-ZUSAMMENSETZUNGEN ZUR HERSTELLUNG VON LAGERSTABILEN COMPOSITES**

EPOXY RESIN COMPOSITIONS FOR THE PREPARATION OF STORAGE-STABLE COMPOSITES

COMPOSITIONS DE RESINE EPOXYDES DESTINEES A LA FABRICATION DE COMPOSITES STABLES EN STOCK

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2015 EP 15199598**

(43) Veröffentlichungstag der Anmeldung:
**14.06.2017 Patentblatt 2017/24**

(73) Patentinhaber: **Evonik Degussa GmbH**
**45128 Essen (DE)**

(72) Erfinder:
- **Ortelt, Martina**
  **74223 Flein (DE)**
- **Fuchsmann, Dirk**
  **45721 Haltern am See (DE)**
- **de Nardo, Sebastian**
  **45899 Gelsenkirchen (DE)**
- **Langkabel, Eike**
  **41844 Wegberg (DE)**
- **Kohlstruk, Britta**
  **45966 Gladbeck (DE)**

- **Sandkühler, Annette**
  **45770 Marl (DE)**
- **Aldridge, Ralph**
  **48249 Dülmen (DE)**
- **Karns, Katharina**
  **45770 Marl (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 2 562 196      EP-A1- 2 803 687**
**WO-A1-93/24863       WO-A1-2015/158768**
**DE-A1- 2 319 814      DE-A1- 2 640 408**
**DE-A1- 2 640 409      US-A- 5 213 897**

Bemerkungen:
Die Akte enthält technische Angaben, die nach dem Eingang der Anmeldung eingereicht wurden und die nicht in dieser Patentschrift enthalten sind.

EP 3 178 863 B1

**Beschreibung**

Gegenstand der Erfindung sind Epoxidharz-Zusammensetzungen bestehend aus mindestens einer Harzkomponente und mindestens einer Härterkomponente, wobei die Zusammensetzung geeignet ist als duroplastische Matrix zur Herstellung von Faser-Matrix-Halbzeugen und ausgehärteten Faser-Matrix-Laminaten, sogenannten Composites.

Epoxidharz-Zusammensetzungen bestehend aus mindestens einem Epoxidharz und mindestens einem Härter, z.B. Amine, Anhydride, Dicyandiamid, sind seit langem bekannt und werden in Anwendungsfeldern wie z.B. Coatings, Composites oder Flooring eingesetzt.

Der Begriff Composites wird im Rahmen dieser Erfindung insbesondere synonym zu den Begriffen Verbundstoff, Verbund-Bauteile, Verbundwerkstoff, Faserverbundwerkstoff, Verbund-Formteile, faserverstärkte Kunststoffe oder faserverstärkte Bauteile, Prepregs, Towpregs, Faser-Matrix-Halbzeug, Faser-Matrix-Laminat, SMC (Sheet Moulding Compound), SMC-Composites (SMC-Faser-Matrix-Halbzeuge), BMC (Bulk Moulding Compound), BMC-Composites (BMC-Faser-Matrix-Halbzeuge) verwendet.

Unter Composites werden in diesem Zusammenhang Verbundwerkstoffe aus Fasern und einer Kunststoff- oder Harzmatrix verstanden. Solche Composites zeichnen sich durch eine hohe spezifische Steifigkeit und Festigkeit bei geringem Gewicht aus und rücken daher im Rahmen steigender Anforderungen an eine effiziente Nutzung knapper Ressourcen immer stärker in den Blickpunkt verschiedener Industrien, z.B. der Automobilindustrie. Im Automobilbau werden neben hohen mechanischen Anforderungen auch hohe Anforderungen an die Oberflächengüte der Bauteile gestellt ("Class A").

Verfahren zur Herstellung von Composites lassen sich in einstufige Verfahren, wie z.B. RTM (Resin Transfer Moulding), VARTM (Vacuum Assisted Resin Transfer Moulding) und mehrstufige Verfahren, wie z.B. Prepreg-Technologie, SMC (Sheet Moulding Compound) einteilen.

Bei zweistufigen Verfahren zur Herstellung von lagerstabilen Composites wird im ersten Schritt eine Faser mit einer Matrix imprägniert. Anschließend wird das Composite, Faser-Matrix-Halbzeug, in einen B-Stage überführt. Unter B-Stage versteht der Fachmann einen Zustand, in dem die reaktiven Komponenten nur teilweise miteinander reagiert haben bis ein Umsatz- bzw. Viskositätsplateau erreicht wurde. Die Matrix ist in diesem Zustand lagerstabil und noch nicht vollständig ausreagiert, schmelzbar und fließfähig. Die Viskosität ist aber deutlich höher als im Ausgangszustand.

In einem zweiten Schritt wird dann das Composite, Faser-Matrix-Halbzeug, in einer Presse zum fertigen Composite, Faser-Matrix-Laminat, unter Temperatur- und Druckbeaufschlagung vollständig ausgehärtet.

Lagerstabile, heißhärtende, klebrige (tacky) und nicht-klebrige (non-tacky) Prepreg- und SMC-Systeme auf Epoxidharzbasis sind bekannt. In dieser Kategorie haben Dicyandiamid ("DiCy")härtende Epoxidharzsysteme den größten Marktanteil. Tacky Prepregs werden z.B. in der Luftfahrt, Windkraft (Rotorblätter) und in der Automobilindustrie eingesetzt. Non-tacky-Prepregs werden dagegen in Anwendungen in der Elektro- und Elektronikindustrie eingesetzt, wo sie zu Leiterplattenbasismaterialien oder Isolier- oder Konstruktionselementen aller Art verarbeitet werden. Epoxy-SMC-Systeme werden ebenfalls in der Automobilindustrie eingesetzt. Hier dienen Epoxy-Systeme als Ersatz für traditionell eingesetzte UP-Harze und VE-Harze, die einerseits toxikologisch bedenkliches Styrol enthalten und andererseits schlechtere mechanische Eigenschaften besitzen als Epoxid-Systeme.

Aufgrund seines geringen Preises, der hohen Verfügbarkeit, seiner hohen Latenz und des ausgewogenen thermo-/mechanischen Eigenschaftsbildes der daraus hergestellten Faserverbundwerkstoffe wird Dicyandiamid bevorzugt und in großen Mengen als Härterkomponente in Epoxidharzformulierungen für Prepregs und SMC-Faser-Matrix-Halbzeuge bzw. Laminate eingesetzt.

Epoxy-Systeme auf Basis von Dicyandiamid für Prepreg-Anwendungen werden bspw. in US 5508328 beschrieben. Wie oben beschrieben, ist zum Imprägnieren der Fasern im ersten Prozessschritt eine niedrige Viskosität notwendig. Da Dicyandiamid fest ist, muss es zunächst gelöst werden und wird dann partiell mit Epoxidharzen umgesetzt. Nachteilig an dem Einsatz von Dicyandiamid in Epoxidsystemen für Prepreg-Anwendungen ist insbesondere seine schlechte Löslichkeit. Eines der wenigen Lösemittel, in dem ein Lösen möglich ist, ist DMF (Dimethlformamid). DMF ist jedoch toxikologisch höchst bedenklich. Im Bereich der tacky Prepregs stehen heute spezielle micronisierte Dicy-Typen zur Verfügung, welche als zweite Phase in die Harzformulierungen eindispergiert werden. Der Aufschluss des Feststoffs gelingt jedoch nicht immer vollständig, so dass Dicy-Konglomerate in der Harzmatrix verbleiben, was zu ungleichmäßig verteiltem Härter und damit aus technischen wie auch optischen Gründen zu Ausschuss führt. Zudem führt das Eindispergieren der micronisierten Partikel zu einem Anstieg der Viskosität. DesWeiteren wird bei der anschließenden Aushärtung der übrigen reaktiven Gruppen von DiCy und Epoxidharzen viel Reaktionswärme in Form von Wärme frei, was zur Schädigung von Laminaten und Bauteilen führen kann, so dass man beim Bau von dickwandigen Bauteilen eingeschränkt ist. Epoxy-Systeme auf Basis von Dicyandiamid für SMC-Anwendungen werden bspw. in US 5508328, WO98022527, WO2014209601, DE 2131929 beschrieben. Nachteilig ist auch hier, dass die Eindispergierung von DiCy (selber ein Feststoff) zu einer höheren Anfangsviskosität führt.

WO2013059062 offenbart Zusammensetzungen aus Epoxidsystemen und einer Verstärkungfaser. Nachteilig an den Zusammensetzungen und dem damit verbundenen Verfahren sind die hohen Werkzeugtemperaturen, die dort zwischen 170 und 225°C liegen.

WO2014184012 offenbart Zusammensetzungen aus Epoxidharz, einem Amin, z.B. Propylamin oder IPD, einem Imidazol und mindestens einem latentem Härter (Dicyandiamid). Nachteilig an den dort beschriebenen Zusammensetzungen ist neben dem Einsatz von Dicyandiamid die geringe Lagerstabilität der SMC-Sheets (im B-Stage). Zur Bestimmung der Lagerstabilität wurde die Minimumsviskosität ermittelt, die innerhalb weniger Tage von einigen 100 mPa*s auf mehrere 1000 mPa*s anstieg. Diese Lagerstabilität wird als nicht ausreichend angesehen, da wie oben beschrieben im B-Stage ein Umsatz- und somit auch ein Viskositätsplateau notwendig ist.

In den Dokumenten DE 2640408, DE 2640409, DE 2540410, DE 2950067 und DE 3328134 wird 2,2,6,6-Tetramethyl-4-piperidylamin (kurz Triacetondiamin oder abgekürzt TAD) als latentes Amin zur Härtung von Epoxidharzen beschrieben. Als Anwendungen kommen dort Oberflächenbeschichtungen mit Schwerpunkt auf Pulverlacken aber auch Formmassen in Frage, die ggf. durch Fasern oder andere Stoffe verstärkt werden können. Als Beispiele werden Kombinationen aus reinem TAD und Epoxidharzen aufgeführt.

Aufgabe

Daher war es die Aufgabe der vorliegenden Erfindung, eine Epoxidharz-Zusammensetzung zu finden, die eine niedrige Anfangsmischviskosität bei 23-40°C hat, um eine gute Faserimprägnierung zu gewährleisten ohne dabei Lösemittel nutzen zu müssen.

Die Epoxidharz-Zusammensetzung sollte möglichst bei Temperaturen ab 25°C in einen B-Stage überführt werden können, indem sie ein Umsatz- und Viskositätsplateau erreicht und bei Raumtemperatur (23°C) für mehrere Wochen lagerstabil ist. Zudem soll die Epoxidharz-Zusammensetzung möglichst schnell vollständig ausgehärtet werden können. Aufgrund der technischen Nachteile beim Einsatz von Dicyandiamid sollte auf den Einsatz dieses Härters verzichtet werden können. Bei der Aushärtung sollte die frei werdende Exothermie möglichst gering sein.

Lösung

Überraschend wurde gefunden, dass die erfindungsgemäße Epoxidharz-Zusammensetzung eine besonders niedrige Anfangsviskosität bei 23-40°C °C hat, und bei Temperaturen zwischen 30 und 200°C in einen B-Stage überführt werden kann, bei dem ein Umsatz- und Viskositätsplateau erreicht wird.

Die Epoxidharz-Zusammensetzung ist in diesem B-Stage für mehrere Monate lagerstabil. Die Epoxidharz-Zusammensetzung kann bei Temperaturen zwischen 120°C und 180°C, zwischen 1 und 60min, vollständig ausgehärtet werden.

Gegenstand der Erfindung ist eine Epoxidharz-Zusammensetzung enthaltend:

A) mindestens eine Epoxidverbindung
und

B) eine Härterzusammensetzung bestehend aus:

B1) 65-99% mindestens eines Polyamins auf Basis von Triacetondiamin
und
B2) 1-35% mindestens eine Verbindung mit mindestens einer gegenüber Epoxidgruppen der Komponente A) reaktiven funktionellen Gruppe ausgewählt aus
Isophorondiamin,
4,4'-Diaminodicyclohexylmethan, 2,4'-Diaminodicyclohexylmethan 2,2'-Diaminodicyclohexylmethan, allein oder in Mischungen der Isomeren, einer Mischung der Isomeren aus 2,2,4-Trimethylhexamethylendiamin und 2,4,4-Trimethylhexamethylendiamin,
Adukthärtern auf Basis der Umsetzungsprodukte von Epoxidverbindungen und Di- und/oder Polyaminen B2) oder
einer Kombination der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1 zu 2 bis 2 zu 1 variiert, bevorzugt von 1,25 zu 1 bis 1 zu 1;

C) 0,1-10 Gew.-% mindestens eines Härtungsbeschleunigers,
wobei sich die Mengen von A)-C) zu 100 Gew.-% addieren,

D) gegebenenfalls Zusatzstoffe.

Als Komponente A) sind Epoxidverbindungen geeignet. Geeignete Epoxidverbindungen werden z. B. in EP 675 185 beschrieben.

Es kommt eine Vielzahl der hierfür bekannten Verbindungen in Betracht, die mehr als eine Epoxidgruppe, vorzugsweise zwei Epoxidgruppen, pro Molekül enthalten. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppierungen und ähnliche. Vorzugsweise handelt es sich dabei um Glycidylether, die sich von mehrwertigen Phenolen, insbesondere Bisphenolen sowie Novolaken ableiten und deren Molmassen bezogen auf die Anzahl der Epoxidgruppen ME ("Epoxidäquivalentgewichte", "EV-Wert") zwischen 100 und 1500, insbesondere jedoch zwischen 150 und 250 g/val, liegen.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan,4,4'-Dihydroxydiphenyl,4,4'-Dihydroxybenzophenon, Bis-(4-hydroxyphenyl)-1,1-äthan, Bis-(4-hydroxyphenyl)-1,1-isobutan, 2,2-Bis-(4-hydroxy-tert.butylphenyl)-propan, Bis-(2-hydroxynaphthyl)-methan, 1,5-Dihydroxynaphthalin, Tris-(4-hydroxyphenyl)-methan, Bis-(4-hydroxyphenyl)-ether, Bis-(4-hydroxyphenyl)-sulfon u. a. sowie die Chlorierungs- und Bromierungsprodukte der vorstehend genannten Verbindungen wie beispielsweise Tetrabrom-Bisphenol A. Ganz besonders bevorzugt, werden flüssige Diglycidylether auf Basis von Bisphenol A und Bisphenol F mit einem Epoxidäquivalentgewicht von 150 bis 200 g/val eingesetzt.

Es können auch Polyglycidylether von Polyalkoholen verwendet werden, wie z. B. Ethandiol-1,2-diglycidylether, Propandiol-1,2-diglycidylether, Propandiol-1,3-diglycidylether, Butandioldiglycidylether, Pentandioldiglycidylether (auch Neopentylglykoldiglycidylether), Hexandioldiglycidylether, Diäthylenglykoldiglycidylether, Dipropylenglykoldiglycidylether, höhere Polyoxyalkylenglykoldiglycidylether, wie z. B. höhere Polyoxyäthylenglykoldiglycidylether und Polyoxypropylenglykoldiglycidylether, Mischpolyoxyäthylen-propylenglykoldiglycidylether, Polyoxytetramethylenglykoldiglycidylether, Polyglycidylether des Glycerins, des 1,2,6-Hexantriols, Trimethylolpropans, Trimethyloläthans, Pentaerythrits, Sorbitols, Polyglycidylether von oxalkylierten Polyolen (wie z. B. des Glycerins, Trimethylolpropans, Pentaerythrits u. a.), Diglydicylether des Cyclohexandimethanols, Bis-(4-hydroxycyclohexyl)methans und 2,2-Bis-(4-hydroxycyclohexyl)propans, Polyglycidylether des Rizinusöls, Triglycidyltris-(2-hydroxy-äthyl)-isocyanurat.

Weiterhin kommen als Komponente A) in Frage: Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen u. a.

Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester.

Weiterhin seien genannt Glycidylester ungesättigter Carbonsäuren und epoxidierte Ester von ungesättigten Alkoholen bzw. ungesättigten Carbonsäuren. Zusätzlich zu den Polyglycidylethern können geringe Mengen von Monoepoxiden wie z. B. Methylglycidylether, Butylglycidylether, Allylglycidylether, Äthylhexylglycidylether, langkettige aliphatische Glycidylether, wie z. B. Cetylglycidylether und Stearylglycidylether, Monoglycidylether eines höheren isomeren Alkoholgemisches, Glycidylether einer Mischung von C12 bis C13 Alkoholen, Phenylglycidylether, Kresylglycidylether, p-t-Butylphenylglycidylethers, p-Octylphenylglycidylether, p-Phenylphenylglycidylether, Glycidylether eines oxalkylierten Laurylalkohols sowie Monoepoxide wie beispielsweise epoxidierte einfach ungesättigte Kohlenwasserstoffe (Butylen-, Cyclohexen-, Styroloxid) in Massenanteilen bis zu 30 Gew.-%, vorzugsweise 10 bis 20 Gew.-%, bezogen auf die Masse der Polyglycidylether mitverwendet werden.

Eine ausführliche Aufzählung der geeigneten Epoxyverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2.

Als Epoxyverbindungen kommen dabei <u>bevorzugt</u> Glycidylether und Glycidylester, aliphatische Epoxide, Diglycidylether auf Basis Bisphenol A und / oder Bisphenol F und Glycidylmethacrylate in Frage. Beispiele für solche Epoxide sind auch Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname CARDURA E10, Shell), 3,4-Epoxycyclohexylmethyl-3',4'-epoxycyclohexancarboxylat (ECC), Ethylhexylglycidylether, Butylglycidylether, Pentaerythrittetraglycidylether, (Handelsname POLYPOX R 16, UPPC AG) sowie andere Polypoxtypen mit freien Epoxygruppen.

Es können auch Mischungen der genannten Epoxyverbindungen eingesetzt werden.

Als Epoxykomponente werden besonders bevorzugt_Polyepoxide auf Basis von Bisphenol A-diglycidylether, Bisphenol F-diglycidylether oder cycloaliphatische Typen eingesetzt. Vorzugsweise werden in der erfindungsgemäßen härtbaren Zusammensetzung Epoxidharze eingesetzt, ausgewählt aus der Gruppe umfassend Epoxidharze auf Basis von Bisphenol A-diglycidylether, Epoxidharze auf Basis von Bisphenol F-diglycidylether und cycloaliphatische Typen wie z. B. 3,4-Epoxycyclohexyl-epoxyethan oder 3,4-Epoxycyclohexylmethyl-3,4-epoxy-cyclohexancarboxylat wobei Bisphenol A basierte Epoxidharze und Bisphenol F basierte Epoxidharze besonders bevorzugt sind.

Erfindungsgemäß können auch Mischungen von Epoxyverbindungen als Komponente A) eingesetzt werden.

Die Menge der Komponente A) richtet sich nach der Zusammensetzung der Komponente B) und wird so berechnet, dass das stöchiometrische Verhältnis der Epoxid-Gruppen von A) und der Anzahl der aktiven Wasserstoffatome der funktionellen Gruppen von B) 2:1 bis 1:2, und bevorzugt 1,25:1 bis 1:1,variiert. Das bedeutet, dass pro Wasserstoffatom der Aminogruppe aus B) eine Epoxidgruppe aus A) zur Reaktion kommt.

Polyamine auf Basis von Triacetondiamin B1) sind der Literatur generell bekannt. Als Komponente B1) werden bevorzugt die folgenden Amine auf Basis von Triacetondiamin eingesetzt: 2,2,6,6-Tetramethyl-4-amino-piperidin (TAD), Hexamethylen-Bis-(4-Amino-2,2,6,6-tetramethylpiperidin), N-Butyl-4-Amino-2,2,6,6-tetramethylpiperidin, N,N-Dimethylaminopropyl-4-Amino-2,2,6,6-tetramethylpiperidin, N-Propyl-4-Amino-2,2,6,6-tetramethylpiperidin, N-Isopropyl-4-Amino-2,2,6,6-tetramethylpiperidin, N-Hydroxyethyl-4-Amino-2,2,6,6-tetramethylpiperidin, N-Methoxyethyl-4-Amino-2,2,6,6-tetramethylpiperidin, N-Methoxyethyl-4-Amino-2,2,6,6-tetramethylpiperidin, N',N'-Dimethylaminoethyl-4-Amino-2,2,6,6-tetramethylpiperidin, N-Morpholinoethyl-4-Amino-2,2,6,6-tetramethylpiperidin, N-Piperazinoethyl-4-Amino-2,2,6,6-tetramethylpiperidin, 4-Morpholino-2,2,6,6-tetramethylpiperidin.

Es können auch Mischungen der vorab genannten Amine auf Basis von Triacetondiamin B1) eingesetzt werden.

Bevorzugt werden 2,2,6,6-Tetramethyl-4-amino-piperidin (TAD) und Hexamethylen-Bis-(4-Amino-2,2,6,6-tetramethylpiperidin), allein oder in Mischungen, eingesetzt.

Die eingesetzte Menge der Komponente B1) beträgt allgemein 65-99 Gew.-%, bevorzugt 70-99 Gew.-%, besonders bevorzugt 80-90 Gew.-%, bezogen auf die Gesamtmenge aus B1) und B2).

Als Verbindungen B2) sind prinzipiell solche Stoffe geeignet, die mindestens eine gegenüber Epoxidgruppen der Komponente A) reaktive funktionelle Gruppen aufweist, bevorzugt 2 bis 4 reaktive Gruppen. Bevorzugt enthalten die Verbindungen B2) mindestens eine der folgenden reaktiven Gruppen: OH-, $NH_2$-, NH-, SH-, NCO-Gruppen. Dabei sind Diamine und Polyamine, Aminoalkohole, Polymercaptane oder Isocyanate bevorzugt. Es können auch Mischungen eingesetzt werden.

Diamine und Polyamine können auch in Mischungen mit latenten Aminen, Aminoalkoholen, Polymercaptanen oder Isocyanaten eingesetzt werden.

Besonders bevorzugt werden Diamine und Polyamine als Komponente B2) eingesetzt.

Di- oder Polyamine B2) sind in der Literatur bekannt. Diese können monomere, oligomere und/oder polymere Verbindungen sein. Monomere und oligomere Verbindungen sind bevorzugt ausgewählt aus der Gruppe Diamine, Triamine, Tetramine. Die Amingruppe der Di- oder Polyamine B2) kann an einem primären, sekundären oder tertiären Kohlenstoffatom angebunden sein, bevorzugt an einem primären oder sekundären Kohlenstoffatom. Es können auch Mischungen von Di- und/oder Polyamine als Komponente B2) eingesetzt werden.

Eingesetzt werden Diamine als Komponente B2) ausgewählt aus Isophorondiamin (3,5,5-Trimethyl-3-aminomethyl-cyclohexylamin, IPD), 4,4'-Diaminodicyclohexylmethan, 2,4'-Diaminodicyclohexylmethan, 2,2'-Diaminodicyclohexylmethan (auch als PACM bezeichnet), allein oder in Mischungen der Isomeren, eine Mischung der Isomeren aus 2,2,4-Trimethylhexamethylendiamin und 2,4,4-Trimethylhexamethylendiamin (TMD), Adukthärter auf Basis der Umsetzungsprodukte von Epoxidverbindungen und den vorgenannten Aminen B2) oder Kombination von vorgenannten Aminen B2). Es können auch Mischungen dieser Verbindungen eingesetzt werden.

Ganz besonders bevorzugt wird als Komponente B2)

a) Isophorondiamin (3,5,5-Trimethyl-3-aminomethyl-cyclohexylamin, IPD),

b) und/oder eine Kombination aus Isophorondiamin und einer Mischung der Isomeren aus 2,2,4-Trimethylhexamethylendiamin und 2,4,4-Trimethylhexamethylendiamin (TMD), und/oder 4,4'-Diaminodicyclohexylmethan, 2,4'-Diaminodicyclohexylmethan, 2,2'-Diaminodicyclohexylmethan (auch als PACM bezeichnet), allein oder in Mischungen der Isomeren,

c) und/oder Adukthärter auf Basis der Umsetzungsprodukte von Epoxidverbindungen und den vorgenannten Aminen B2) oder Kombination von vorgenannten Aminen B2),

eingesetzt.

Erfindungsgemäß können auch Aminoalkohole als Komponente B2) eingesetzt werden. Als Aminoalkohole seien beispielhaft Monoethanolamin, 3-Amino-1-propanol, Isopropanolamin, Aminoethoxyethanol, N-(2-Aminoethyl)ethanolamin, N-Ethylethanolamin, N-Butylethanolamin, Diethanolamin, 3-(Hydroxyethylamino)-1-propanol Isophoronaminoalkohol und Diisopropanolamin genannt. Aminoalkohole können allein oder als Mischungen mehrerer Aminoalkohole zusammen mit Di- und Polyaminen als Komponente B2) eingesetzt werden.

Erfindungsgemäß können auch polybasische Säuren und Anhydride als Komponente B2) eingesetzt werden. Als Anyhdride seien bspw. Phthalsäureanhydrid, Hexahydrophthalsäureanhydrid, Methyl-1,2,3,6-Tetrahydrophthalsäureanhydrid, Hexachlorendomethylen-1,2,3,6-Tetrahydrpphthalsäureanhydrid, Methylendomethylentetrahydrophthalsäureanhydrid, Maleinsäureanhydrid, Bernsteinsäureanhydrid, Alkyenylbernsteinsäureanhydride wie Nonenyl- oder Dodecenylbernsteinsäureanhydrid, Polysebacinsäureanhydrid, Polaacelainsäureanhydrid, Pyrromellitsäuredianhydrid, Benzophenon-3,3',4,4'-tetracarboxylsäureanhydrid genannt. Geeignete polybasische Säuren und Anhydride werden auch in **"Epoxy Resins - Chemistry and Technology; Curing Agents and Modifiers; S. 482-487, 2. Ausgabe 1988"** genannt.

Polybasische Säuren und Anhydride können allein oder als Mischungen zusammen mit Di- und Polyaminen als Komponente B2) eingesetzt werden.

Erfindungsgemäß können auch Polymercaptane als Komponente B2) eingesetzt werden. Als Mercaptane, auch Thiole genannt, seien bspw. Ethanthiol, Dithiothreitol, Dithioerythritol, Glyceryldithioglykolat, Glykoldimercaptoacetat, Trimethylolpropantrimercaptoacetat, Pentaerythritoltetramercaptoacetate, Glykoldi(3-mercaptopropionat), Trimethylolpropantri(3-mercaptopropionat), Pentaerythritoltetra(3-mercaptopropionat), Dipentaerythritolhexa(3-mercaptopropionat), Ethoxyliertes-Trimethylolpropan-tri(3-mercaptopropionat) (Produktname: Thiocure ETTMP 1300), Tris[2-(3-mercaptopropionyloxy)ethyl]isocyanurat. Weitere Mercaptane werden bspw. in EP394495A1, US4775733A1 und WO2007096425A2... genannt. Mercpatane können allein oder als Mischungen zusammen mit Di- und Polyaminen als Komponente B2) eingesetzt werden.

Erfindungsgemäß können auch Polyphenole als Komponente B2) eingesetzt werden. Beispiele dafür werden in **"Epoxy Resins - Chemistry and Technology; Curing Agents and Modifiers; S. 481-482, 2. Ausgabe 1988"** genannt. Polyphenole können allein oder als Mischungen zusammen mit Di- und Polyaminen als Komponente B2) eingesetzt werden.

Erfindungsgemäß können auch Diole und Polyole als Komponente B2) eingesetzt werden. Als Diole und Polyole werden z. B. Ethylenglykol, 1,2-, 1,3-Propandiol, Diethylen-, Dipropylen-, Triethylen-, Tetraethylenglykol, 1,2-, 1,4-Butandiol, 1,3-Butylethylpropandiol, 1,3-Methylpropandiol, 1,5-Pentandiol, Bis-(1,4-hydroxymethyl)cyclohexan (Cyclohexandimethanol), Glycerin, Hexandiol, Neopentylglykol, Trimethylolethan, Trimethylolpropan, Pentaerythrit, Bisphenol A, B, C, F, Norbornylenglykol, 1,4-Benzyldimethanol, -ethanol, 2,4-Dimethyl-2-ethylhexan-1,3-diol, 1,4- und 2,3-Butylenglykol, Di-$\beta$-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0$^{2,6}$]decan (Dicidol), 2,2-Bis-(4-hydroxycyclohexyl)propan, 2,2-Bis-[4-($\beta$-hydroxyethoxy)-phenyl]propan, 2-Methyl-propandiol-1,3, 2-Methylpentandiol-1,5, 2,2,4(2,4,4)-Trimethylhexandiol-1,6, Hexantriol-1,2,6, Butantriol-1,2,4, Tris-($\beta$-hydroxyethyl)isocyanurat, Mannit, Sorbit, Polypropylenglykole, Polybutylenglykole, Xylylenglykol oder Hydroxypivalinsäureneopentylglykolester, Hydroxyacrylate, allein oder in Mischungen, eingesetzt. Besonders bevorzugt sind 1,4-Butandiol, 1,2-Propandiol, Cyclohexandimethanol, Hexandiol, Neopentylglykol, Decandiol, Dodecandiol, Trimethylolpropan, Ethylenglykol, Triethylenglykol, Pentandiol-1,5, Hexandiol-1,6, 3-Methylpentandiol-1,5, Neopentylglykol, 2,2,4 (2,4,4)-Trimethylhexandiol sowie Hydroxypivalinsäureneopentylglykolester. Sie werden allein oder in Mischungen verwendet. 1,4-Butandiol wird nur in Mischungen eingesetzt.

Als Verbindungen B) eignen sich auch Diole und Polyole, die weitere funktionelle Gruppen enthalten. Hierbei handelt es sich um die an sich bekannten linearen oder schwach verzweigten hydroxylgruppenhaltigen Polyester, Polycarbonate, Polycaprolactone, Polyether, Polythioether, Polyesteramide, Polyacrylate, Polyvinylalkohole, Polyurethane oder Polyacetale. Sie weisen vorzugsweise ein zahlenmittleres Molekulargewicht von 134 bis 20000 g/mol besonders bevorzugt 134 - 4000 g/mol auf. Bei den hydroxylgruppenhaltigen Polymeren werden bevorzugt Polyester, Polyether, Polyacrylate, Polyurethane, Polyvinylalkohole und/oder Polycarbonate mit einer OH-Zahl von 5 - 500 (in mg KOH/Gramm) eingesetzt.

Bevorzugt sind lineare oder schwach verzweigte hydroxylgruppenhaltige Polyester - Polyesterpolyole - oder Gemische solcher Polyester. Sie werden z. B. durch Umsetzung von Diolen mit unterschüssigen Mengen an Dicarbonsäuren, entsprechenden Dicarbonsäureanhydriden, entsprechenden Dicarbonsäureestern von niederen Alkoholen, Lactonen oder Hydroxycarbonsäuren hergestellt.

Zur Herstellung der bevorzugten Polyesterpolyole geeignete Diole und Polyole sind neben den oben genannten Diolen und Polyolen auch 2-Methylpropandiol, 2,2-Dimethylpropandiol, Diethylenglykol, Dodecandiol-1,12, 1,4-Cyclohexandimethanol und 1,2- und 1,4-Cyclohexandiol. Bevorzugt werden 1,4-Butandiol, 1,2-Propandiol, Cyclohexandimethanol, Hexandiol, Neopentylglykol, Decandiol, Dodecandiol, Trimethylolpropan, Ethylenglykol, Triethylenglykol, Pentandiol-1,5, Hexandiol-1,6, 3-Methylpentandiol-1,5, Neopentylglykol, 2,2,4 (2,4,4)-Trimethylhexandiol sowie Hydroxypivalinsäureneopentylglykolester zur Herstellung der Polyesterpolyole eingesetzt.

Zur Herstellung der Polyesterpolyole geeignete Dicarbonsäuren oder Derivate können aliphatischer, cycloaliphatischer, aromatischer und/oder heteroaromatischer Natur sein und gegebenenfalls, z. B. durch Halogenatome, substituiert und/oder ungesättigt sein.

Zu den bevorzugten Dicarbonsäuren oder Derivaten zählen Bernstein-, Adipin-, Kork-, Azelain- und Sebacinsäure, 2,2,4 (2,4,4)-Trimethyladipinsäure, Phthalsäure, Phthalsäureanhydrid, Isophthalsäure, Terephthalsäure, Terephthalsäuredimethylester, Tetrahydrophthalsäure, Maleinsäure, Maleinsäureanhydrid und dimere Fettsäuren.

Geeignete Polyesterpolyole sind auch solche, die sich in bekannter Weise durch Ringöffnung aus Lactonen, wie -Caprolacton, und einfachen Diolen als Startermoleküle herstellen lassen. Auch Mono- und Polyester aus Lactonen, z. B. ε-Caprotacton oder Hydroxycarbonsäuren, z. B. Hydroxypivalinsäure, ε-Hydroxydecansäure, ε-Hydroxycapronsäure, Thioglykolsäure, können als Ausgangsstoffe für die Herstellung der Polymere G) eingesetzt werden. Polyester aus den oben (S. 6) genannten Polycarbonsäuren bzw. deren Derivaten und Polyphenolen, die Hydrochinon, Bisphenol-A, 4,4'-Dihydroxybiphenyl oder Bis-(4-hydroxyphenyl)-sulfon; Polyester der Kohlensäure, die aus Hydrochinon, Diphenylolpropan, p-Xylylenglykol, Ethylenglykol, Butandiol oder Hexandiol-1,6 und anderen Polyolen durch übliche Kondensationsreaktionen, z. B. mit Phosgen oder Diethyl- bzw. Diphenylcarbonat, oder aus cyclischen Carbonaten, wie Glykolcarbonat oder Vinylidencarbonat, durch Polymerisation in bekannter Weise erhältlich sind; Polyester der Kieselsäure, Polyester der Phosphorsäure, z. B. aus Methan-, Ethan-, β-Chlorethan-, Benzol- oder Styrolphosphorsäure oder deren Derivate, wie z.B., Phosphorsäurechloride oder Phosphorsäureester und Polyalkoholen oder Polyphenolen der oben genannten Art; Polyester der Borsäure; Polysiloxane, wie z. B. die durch Hydrolyse von Dialkyldichlorsilanen mit Wasser und nachfolgende Behandlung mit Polyalkoholen, die durch Anlagerung von Polysiloxandihydriden an Olefinen, wie Allylalkohol oder Acrylsäure, erhältlichen Produkte, sind geeignet als Ausgangsstoffe für die Herstellung der Verbindungen B).

Die Polyester können auf an sich bekannte Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist.

Bevorzugt einsetzbar sind zudem lineare oder verzweigte Polyetherpolyole. Beispiele dafür sind Lupranol 1000, 1100, 2032, 3402, 3300, 3422, 3504/1, 3505/1, Polyol 4800, 4640, 4525, 4360, Polytetramethylenetherglykole wie bspw. Terathane 250, 650, 1000 und 2000, Voranol CP 300, CP 450, CP 755, Caradol ET 380-02, ET 570-02, Sovermol 750, 760, 805, 810 und 815.

Ebenfalls bevorzugt einsetzbar sind OH-Gruppen haltige (Meth-)Acrylate und Poly(meth)acrylate. Sei werden hergestellt durch die Co-Polymerisation von (Meth-)Acrylaten, wobei einzelne Komponenten OH-Gruppen tragen andere hingegen nicht. So wird ein statistisch verteiltes OH-Gruppen haltiges Polymer erzeugt, welches keine, eine oder viele OH-Gruppen trägt. Solche Polymere werden beschreiben unter **High solids hydroxy acrylics with tightly controlled molecular weight.** van Leeuwen, Ben. SC Johnson Polymer, Neth. PPCJ, Polymers Paint Colour Journal (1997), 187(4392), 11-13;

**Special techniques for synthesis of high solid resins and applications in surface coatings.** Chakrabarti, Suhas; Ray, Somnath. Berger Paints India Ltd., Howrah, India. Paintindia (2003), 53(1), 33-34,36,38-40;

**VOC protocols and high solid acrylic coatings.** Chattopadhyay, Dipak K.; Narayan, Ramanuj; Raju, K. V. S. N. Organic Coatings and Polymers Division, Indian Institute of Chemical Technology, Hyderabad, India. Paintindia (2001), 51(10), 31-42.

Die zur Herstellung der Polyesterpolyole verwendeten Diole und Dicarbonsäuren bzw. deren Derivate können in beliebigen Mischungen eingesetzt werden.

Es können auch Mischungen aus Polyetherpolyen, Polyesterpolyolen und Diolen eingesetzt werden.

Geeignete Verbindungen B2) sind auch die Reaktionsprodukte von Polycarbonsäuren und Glycidverbindungen, wie sie z. B. in der DE-OS 24 10 513 beschrieben sind.

Diole und Polyole können allein oder als Mischungen zusammen mit Di- und Polyaminen als Komponente B2) eingesetzt werden.

Erfindungsgemäß können auch beliebige aromatische, aliphatische, cycloaliphatische und/oder (cyclo)aliphatische Diisocyanate und/oder Polyisocyanaten als Komponente B2) eingesetzt werden.

Beispiele für aromatische Diisocyanate und Polyisocyanate sind 1,3- und 1,4-Phenylendiisocyanat, 1,5-Naphthylendiisocyanat, Tolidindiisocyanat, 2,6-Toluylendiisocyanat, 2,4-Toluylendiisocyanat (2,4-TDI), 2,4'-Diphenylmethandiisocyanat (2,4'-MDI), 4,4'-Diphenylmethandiisocyanat, die Mischungen aus monomeren Diphenylmethandiisocyanaten (MDI) und oligomeren Diphenylmethandiisocyanaten (Polymer-MDI), Xylylendiisocyanat und Tetramethylxylylendiisocyanat. Beispiele für aliphatische und cycloaliphatische Isocyanate sind Pentandiisocyanat, Hexandiisocyanat, Cyclohexandiisocyanat, 4-Isocyanatomethyl-1,8-octandiisocyanat (TIN), Isophorondiisocyanat (IPDI), Hexamethylendiisocyanat (HDI), Diisocyanatodicyclohexylmethan ($H_{12}$MDI), 2,2,4-Trimethylhexamethylendiisocyanat, 2,4,4-Trimethylhexamethylendiisocyanat (TMDI) sowie deren Gemische, Norbornandiisocyanat (NBDI). Die Isocyanate können mit geeigneten Blockierungsmitteln blockiert sein. Besonders bevorzugt werden IPDI, HDI, TMDI und $H_{12}$MDI eingesetzt, allein oder in Mischungen.

Weitere geeignete Isocyanate werden auch in WO2014184257A1 genannt.

Es können auch die Isocyanurate, falls herstellbar, eingesetzt werden. Selbstverständlich können auch Gemische der Diisocyanate und Polyisocyanate eingesetzt werden.

Weiterhin werden vorzugsweise Oligo- oder Polyisocyanate verwendet, die sich aus den genannte Diisocyanate oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Besonders geeignet sind Isocyanurate, insbesondere aus IPDI und/oder HDI.

Erfindungsgemäß können auch latente Härter als Komponente B2) eingesetzt werden. Als latenter Härter kann im Prinzip jede für diesen Zweck bekannte Verbindung eingesetzt werden, d.h. jede Verbindung, welchen Epoxidharzen gegenüber unterhalb der definierten Grenztemperatur von 80 °C inert ist, die aber schnell unter Vernetzung des Harzes reagiert, sobald diese Grenztemperatur überschritten ist. Die Grenztemperatur der verwendeten latenten Härter ist vorzugsweise mindestens 85°C, insbesondere mindestens 100°C. Solche Verbindungen sind wohlbekannt und auch im Handel erhältlich. Prinzipiell können latente Härter, ausgewählt aus Dicyandiamid, Cyanoguanidine, aromatische Amine, Guanidinen, modifizierten Polyaminen, N-Acylimidazolen, Imidazolen, Carbonsäurehydrazide, Triazinderivate, Melamin und dessen Derivate, N-Cyanacylamid-Verbindungen, Acylthiopropylphenole, eingesetzt werden.

Beispiele geeigneter latenter Härter sind Dicyandiamid, Cyanoguanidine, wie z. B. die in den US 4,859,761 oder EP-A- 306 451 beschriebenen Verbindungen, aromatische Amine, wie z.B. 4,4- - oder 3,3-Diaminodiphenylsulfon, oder Guanidine, wie z. B. 1-o-Tolylbiguanid, oder modifizierte Polyamine, wie z. B. Ancamine TM 2014 S (Anchor Chemical UK Limited, Manchester). Geeignete latente Härter sind auch N-Acylimidazole, wie z.B. 1-(2,4,6 -Trimethylbenzoyl)-2-phenylimidazol oder 1-Benzoyl-2-isopropylimidazol. Solche Verbindungen sind beispielsweise in den US 4,436,892, US 4,587,311 oder der JP-PS 743,212 beschrieben.

Weitere geeignete Härter sind Metallsalzkomplexe von Imidazolen, wie z. B. in der US 3,678,007 oder US 3,677,978 beschrieben, Carbonsäurehydrazide, wie z. B. Adipinsäuredihydrazid, Isophthalsäuredihydrazid oder Anthranilsäurehydrazid, Triazinderivate, wie z. B. 2-Phenyl-4,6-diamino-s-triazin (Benzoguanamin) oder 2-Lauryl-4,6-diamino-s-triazin (Lauroguanamin) sowie Melamin und dessen Derivate. Die letztgenannten Verbindungen sind z. B. in der US 3,030,247 beschrieben.

Als latente Härter geeignet sind auch Cyanacetylverbindungen, wie z. B. in der US 4,283,520 beschrieben, beispielsweise Neopentylglykolbiscyanessigester, Cyanessigsäure-N-isobutylamid, 1,6-Hexamethylen-bis-cyanacetat oder 1,4-Cyclohexandimethanol-bis-cyanacetat.

Geeignete latente Härter sind auch N-Cyanacylamid-Verbindungen wie z. B. N,N min - Dicyanadipinsäurediamid. Solche Verbindungen sind z. B. in den US 4,529,821, US 4,550,203 und US 4,618,712 beschrieben.

Weitere geeignete latente Härter sind die in der US 4,694,096 beschriebenen Acylthiopropylphenole und die in der US 3,386,955 offenbarten Harnstoffderivate wie beispielsweise Toluol-2,4-bis(N,N-Dimethylcarbamid).

Bevorzugte latente Härter sind 4,4 -Diaminodiphenylsulfon und Dicyandiamid.

Es können auch Mischungen der vorab genannten latenten Amine als Komponente B2) eingesetzt werden.

Die Härter-Komponente B2) wird in Mengen von 1-35 Gew.-%, bevorzugt von 1-30 Gew.-%, , besonders bevorzugt von 10-20 Gew.-%, bezogen auf die Gesamtmenge aus B1) und B2), eingesetzt.

Weiterhin sind Härtungsbeschleuniger als Komponente C) enthalten und werden als Katalysatoren für die Epoxy-Amin-Reaktion zugegeben. Geeignete Beschleuniger sind beschrieben in: H. Lee and K. Neville, Handbook of Epoxy Resins, McGraw-Hill, New York, 1967. Beispiele für geeignete Beschleuniger sind organische Säuren wie Salicylsäure, Dihydroxybenzoesäure, Trihydroxybenzoesäure, Methylsalicylsäure, 2-Hydroxy-3-isopropylbenzoesäure oder Hydroxynaphthoesäuren, Milchsäure und Glycolsäure, tertiäre Amine wie Benzyldimethylamin (BDMA), 1,4-Diazabicyclo[2,2,2]octan (DABCO), Triethylamin, N,N'-Dimethylpiperazin oder Aminoethylpiperazin (AEP), Hydroxylamine wie Dimethylaminomethylphenol, Bis(dimethylaminomethyl)phenol, 2,4,6-Tris(dimethylaminomethyl)phenol (Ancamine K54), Urone wie 3-(4-Chlorphenyl)-1,1-dimethylharnstoff (Monuron), 3-(3,4-Dichlorphenyl)-1,1-dimethyl-harnstoff (Diuron), 3-Phenyl-1,1-dimethylharnstoff (Fenuron), 3-(3-Chlor-4-methylphenyl)-1,1-dimethyl-harnstoff (Chlortoluron), Tetraalkylguanidine wie N,N,N',N'-Tetramethylguanidin (TMG), Imidazol und -derivate wie 1H-Imidazol, 1-Methylimidazol, 2-Methylimidazol, 1-Benzyl-2-methylimidazol, 2-Ethyl-4-methylimidazol, 2-Phenylimidazol, 2-Phenyl-4-methylimidazol, 1-Vinylimidazol, 1-(2-Hydroxyethyl)imidazol, 1,2-Dimethylimidazol, 1-Cyanoethylimidazol und deren geeignete Salze, Phenol und -derivate wie t-Butylphenol, Nonylphenol, Bisphenol-A oder Bisphenol-F sowie organische oder anorganische Salze und Komplexverbindungen wie Methyltriphenylphosphoniumbromid, Calciumnitrat (Accelerator 3130), oder Mg-, Ca-, Zn- und Sn-Carboxylate, -sulfonate, -phosphonate, -sulfate,-tetrafluoroborate, oder -nitrate, sowie -triflate. Besonders bevorzugt sind Imidazol und Imidazol-Derivate.

Erfindungsgemäß werden 0,1-10 Gew.-%, bevorzugt 0,1-5 Gew.-%, besonders bevorzugt 0,5-2,0 Gew.-%, bezogen auf die Gesamtmenge der Komponenten, mindestens eines Härtungsbeschleunigers eingesetzt.

Die erfindungsgemäße Zusammensetzung kann gegebenenfalls Zusatzstoffe D) enthalten. Unter Zusatzstoffen werden Stoffe verstanden, die in der Regel zugesetzt werden, um die Eigenschaften der Epoxidzusammensetzung in gewünschter Richtung zu verändern, z. B. Viskosität, Benetzungsverhalten, Stabilität, Reaktionsgeschwindigkeit, Blasenbildung, Lagerfähigkeit oder Haftung, und auch Gebrauchseigenschaften dem Anwendungszweck anzupassen. Geeignete Zusatzstoffe werden z.B. in WO 99/55772, S. 15-25, und in **"Plastics Additives; R. Gächter und H. Müller, Hanser Publishers 1983"** beschrieben. Diese können der Komponente A) oder B) zugegeben werden.

So können beispielsweise Lichtschutzmittel wie z. B. sterisch gehinderte Amine, oder andere Hilfsmittel, wie sie z. B. in EP 669 353 beschrieben wurden, in einer Gesamtmenge von 0,05 bis 5 Gew.-% bezogen auf die Summe aus A), B) und C) zugesetzt werden.

Füllstoffe und Pigmente wie z. B. Calciumcarbonat oder Titandioxid oder organische Farbstoffe können in einer Menge bis zu 250 Gew.-% bezogen auf die Summe aus A), B) und C) zugesetzt werden.

Für die Herstellung der erfindungsgemäßen reaktiven Zusammensetzungen können darüber hinaus Zusatzstoffe wie Verlaufsmittel, z. B. Polysilicone oder Haftvermittler, z. B. auf Acrylatbasis, zugesetzt werden. Zusätzlich können noch weitere Komponenten optional enthalten sein.

Als Hilfs- und Zusatzstoffe können zusätzlich Regler, Weichmacher, Stabilisatoren und/oder Inhibitoren eingesetzt werden.

Darüber hinaus können Farbstoffe, nanoskalige Füllstoffe, Toughener (Zähigkeitsverbesserer), Trennmittel, Flammschutzmittel, Pigmente, Trockenmittel, Netz-, Dispergier- und Verlaufshilfsmittel, Lösemittel, Haftvermittler, UV-Stabilisatoren, Entschäumer und Rheologieadditive zugesetzt werden.

Weiterhin können den Epoxidharz-Zusammensetzungen thermoplastische Harze zugegeben werden, um mechanische Eigenschaften insbesondere mit Bezug auf die Zähigkeit und Schwindung und Schrumpf zu verbessern. Der Literatur ist bereits eine Vielzahl von thermoplastischen Harzen wie Polyester, Polymethylmethacrylat, Polyniylbutyral, Polyvinylacetal, Polyvinylformal, Polyvinylpyrrolidone, Polycarbonate und Polyamide zu finden.

Weitere Beispiele sind in US7754322, US7968179, US8021752 und US8470923 genannt.

Gegenstand der Erfindung ist auch die Verwendung einer Epoxidharz-Zusammensetzung enthaltend:

A) mindestens eine Epoxidverbindung
und

B) eine Härterzusammensetzung bestehend aus:

B1) 65-99% mindestens eines Polyamins auf Basis von Triacetondiamin
und
B2) 1-35% mindestens einer Verbindung mit mindestens einer gegenüber Epoxidgruppen der Komponente A) reaktiven funktionellen Gruppe ausgewählt aus
Isophorondiamin,
4,4'-Diaminodicyclohexylmethan, 2,4'-Diaminodicyclohexylmethan 2,2'-Diaminodicyclohexylmethan, allein oder in Mischungen der Isomeren,
einer Mischung der Isomeren aus 2,2,4-Trimethylhexamethylendiamin und 2,4,4-Trimethylhexamethylendiamin,
Addukthärtern auf Basis der Umsetzungsprodukte von Epoxidverbindungen und Di- und/oder Polyaminen B2) oder
einer Kombination der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1 zu 2 bis 2 zu 1 variiert, bevorzugt von 1,25 zu 1 bis 1:1;

C) 0,1-10% eines Härtungsbeschleunigers,
wobei sich die Mengen von A)-C) zu 100 Gew.-% addieren,

D) gegebenenfalls Zusatzstoffe,
zur Herstellung von lagerstabilen Composites.

Gegenstand der Erfindung sind auch lagerstabile Composite, im Wesentlichen aufgebaut aus

1) mindestens einem Faser förmigen Träger und

2) einer Epoxidharz-Zusammensetzung enthaltend:

A) mindestens eine Epoxidverbindung
und

B) eine Härterzusammensetzung bestehend aus:

B1) 65-99% mindestens eines Polyamins auf Basis von Triacetondiamin und
B2) 1-35% mindestens einer Verbindung mit mindestens einer gegenüber Epoxidgruppen der Komponente A) reaktiven funktionellen Gruppe ausgewählt aus
Isophorondiamin,
4,4'-Diaminodicyclohexylmethan, 2,4'-Diaminodicyclohexylmethan 2,2'-Diaminodicyclohexylmethan, allein oder in Mischungen der Isomeren,
einer Mischung der Isomeren aus 2,2,4-Trimethylhexamethylendiamin und 2,4,4-Trimethylhexamethylendiamin,
Addukthärtern auf Basis der Umsetzungsprodukte von Epoxidverbindungen und Di- und/oder Polyaminen B2) oder
einer Kombination der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1 zu 2 bis 2 zu 1 variiert, bevorzugt von 1,25 zu 1 bis 1:1;
C) 0,1-10% mindestens eines Härtungsbeschleunigers,
wobei sich die Mengen von A)-C) zu 100 Gew.-% addieren,
D) gegebenenfalls Zusatzstoffe.

Gegenstand der Erfindung sind auch lagerstabile Prepregs und lagerstabile SMC Composites (Sheet Moulding Compound),
im Wesentlichen aufgebaut aus

1) mindestens einem Faser förmigen Träger und

2) einer Epoxidharz-Zusammensetzung enthaltend:

A) mindestens eine Epoxidverbindung und
B) eine Härterzusammensetzung bestehend aus:

B1) 65-99% mindestens eines Polyamins auf Basis von Triacetondiamin und
B2) 1-35% mindestens einer Verbindung mit mindestens einer gegenüber Epoxidgruppen der Komponente A) reaktiven funktionellen Gruppe ausgewählt aus Isophorondiamin,
4,4'-Diaminodicyclohexylmethan, 2,4'-Diaminodicyclohexylmethan 2,2'-Diaminodicyclohexylmethan, allein oder in Mischungen der Isomeren,
einer Mischung der Isomeren aus 2,2,4-Trimethylhexamethylendiamin und 2,4,4-Trimethylhexamethylendiamin,
Addukthärtern auf Basis der Umsetzungsprodukte von Epoxidverbindungen und Di- und/oder Polyaminen B2) oder
einer Kombination der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1 zu 2 bis 2 zu 1 variiert, bevorzugt von 1,25 zu 1 bis 1 zu 1;
C) 0,1-10 Gew.-% mindestens eines Härtungsbeschleunigers,
wobei sich die Mengen von A)-C) zu 100 Gew.-% addieren,
D) gegebenenfalls Zusatzstoffe.

Gegenstand der Erfindung sind auch erfindungsgemäß hergestellte Composite-Bauteile, aufgebaut aus mindestens einem faserförmigen Träger und mindestens einer vernetzten Zusammensetzung:
Composite-Bauteile, aufgebaut aus mindestens einem faserförmigen Träger und mindestens einer vernetzten Zusammensetzung aus:

A) mindestens eine Epoxidverbindung und

B) eine Härterzusammensetzung bestehend aus:

B1) 65-99% mindestens eines Polyamins auf Basis von Triacetondiamin und

B2) 1-35% mindestens einer Verbindung mit mindestens einer gegenüber Epoxidgruppen der Komponente A) reaktiven funktionellen Gruppe ausgewählt aus Isophorondiamin, 4,4'-Diaminodicyclohexylmethan, 2,4'-Diaminodicyclohexylmethan 2,2'-Diaminodicyclohexylmethan, allein oder in Mischungen der Isomeren, einer Mischung der Isomeren aus 2,2,4-Trimethylhexamethylendiamin und 2,4,4-Trimethylhexamethylendiamin, Adukthärtern auf Basis der Umsetzungsprodukte von Epoxidverbindungen und Di- und/oder Polyaminen B2) oder einer Kombination der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1 zu 2 bis 2 zu 1 variiert, bevorzugt von 1,25 zu 1 bis 1 zu 1;

C) 0,1-10 Gew.-% mindestens eines Härtungsbeschleunigers, wobei sich die Mengen von A)-C) zu 100 Gew.-% addieren,

D) gegebenenfalls Zusatzstoffe.

Faserförmiger Träger

Das erfindungsgemäß bevorzugt verwendete faserförmige Trägermaterial der Composites ist dadurch gekennzeichnet, dass die faserförmigen Träger größtenteils aus Glas, Kohlenstoff, Kunststoffen wie Polyamid (Aramid) oder Polyester, Naturfasern, oder mineralischen Fasermaterialien wie Basaltfasern oder keramische Fasern bestehen, einzeln oder aus Mischungen, oder aus mehreren Lagen verschiedener Fasertypen.

Die faserförmigen Träger liegen als textile Flächengebilde aus Vlies, Maschenware, Gewirke oder Gestricke, nicht maschige Gebinde wie Gewebe, Gelege oder Geflechte, als Langfaser- oder Kurzfasermaterialien vor, einzeln oder aus mehreren Lagen verschiedener Typen.

Im Detail liegt folgende Ausführung vor: Der faserförmige Träger in der vorliegenden Erfindung besteht aus faserförmigem Material (auch häufig Verstärkungsfasern genannt). Im Allgemeinen ist jegliches Material, aus dem die Fasern bestehen, geeignet, bevorzugt wird jedoch faserförmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z.B. Gewebe-Kombinationen aus Aramid- und Glasfasern, oder Kohlenstoff und Glasfasern, können verwendet werden. Ebenso sind Hybrid-Composite-Bauteile mit Prepregs aus unterschiedlichen faserförmigen Trägern geeignet.

Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern). Kohlenstofffasern kommen im Allgemeinen in Hochleistungsverbundstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z.B. Holz-, Zellulose-, Baumwoll-, Hanf-, Jute-, Leinen-, Sisal-, Bambusfasern). Aramid-Fasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser- Verbundwerkstoffen deutlich geringer. Bekannte Markennamen für Aramidfasern sind Nomex® und Kevlar® von DuPont, oder Teijinconex®, Twaron® und Technora® von Teijin. Besonders geeignet und bevorzugt sind Träger aus Glasfasern, Kohlenstofffasern, Aramidfasern oder keramischen Fasern. Bei dem faserförmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als faserförmiger Träger geeignet. Einen Überblick über Verstärkungsfasern enthält "Composites Technologien", Paolo Ermanni (Version 4), Script zur Vorlesung ETH Zürich, August 2007, Kapitel 7.

Gegenstand der Erfindung ist insbesondere auch die Verwendung der erfindungsgemäß hergestellten Composites im Boots- und Schiffbau, in der Luft- und Raumfahrtechnik, für Zweiräder, bevorzugt Motorräder und Fahrräder, Construction, Medizintechnik, Sport, Energieerzeugungsanlagen, für Rotorblätter von Windkraftanlagen, bevorzugt im Bereich Automotive, im Bereich Pressure Vessels und in der Elektro- und Elektronikindustrie.

Bei dem zweistufigen Verfahren zur Herstellung der erfindungsgemäßen Composites wird im ersten Schritt eine Faser mit einer Matrix imprägniert. Anschließend wird das Composite, Faser-Matrix-Halbzeug, in einen B-Stage überführt. Unter B-Stage versteht der Fachmann einen Zustand, in dem die reaktiven Komponenten nur teilweise miteinander reagiert haben bis ein Umsatz- und Viskositätsplateau erreicht wurde. Die erfindungsgemäße Epoxidharz-Zusammensetzung weist eine besonders niedrige Anfangsviskosität <1000 mPa*s bei 23°C auf und kann bei Temperaturen zwischen 30 und 200°C, bevorzugt zwischen 30 und 150°C in einen B-Stage überführt werden, bei dem ein Umsatz- und Viskositätsplateau erreicht wird, auf einen Umsatz von 1-90%, bevorzugt 50-80%, besonders bevorzugt 60-80%. Die Matrix aus der Epoxidharz-Zusammensetzung und das Composite sind in diesem Zustand lagerstabil und noch nicht vollständig ausreagiert, schmelzbar und fließfähig. Die Viskosität ist aber deutlich höher als im Ausgangszustand.

Die erfindungsgemäße Epoxidharz-Zusammensetzung ist in diesem B-Stage für mehrere Monate lagerstabil.

Die erfindungsgemäßen lagerstabilen Composites, insbesondere die erfindungsgemäßen Prepregs und die SMC-Composites weisen nach Abkühlung auf Raumtemperatur eine sehr hohe Lagerstabilität bei Raumtemperatur auf. Diese beträgt je nach enthaltener reaktiver EpoxidZusammensetzung und Katalyse mindestens einige Tage bei Raumtemperatur, aber in der Regel sind die Prepregs mehrere Wochen oder sogar Monate bei Raumtemperatur und darunter lagerstabil. Die so hergestellten Prepregs sind meist nicht klebrig und daher sehr gut zu handhaben und weiter zu verarbeiten. Die erfindungsgemäß eingesetzten reaktiven Zusammensetzungen weisen demnach eine sehr gute Haftung und Verteilung auf dem Faserförmigen Träger auf.

In einem zweiten Schritt wird dann das Composite (Faser-Matrix-Halbzeug) in einer Presse zum fertigen Composite, Faser-Matrix-Laminat, unter Temperatur- und Druckbeaufschlagung vollständig zum fertigen Composite ausgehärtet. Typische Härtungstemperaturen liegen zwischen 120 und 180°C. Die erfindungsgemäße Epoxidharz-Zusammensetzung kann bei Temperaturen zwischen 120°C und 180°C, bevorzugt 120 und 160°C, besonders bevorzugt 130°C und 150°C zwischen 1 und 60 Minuten, bevorzugt 1 und 20 Minuten, besonders bevorzugt 2 und 10 Minuten, vollständig ausgehärtet werden.

Gegenstand der Erfindung ist auch ein Verfahren zur Herstellung von lagerstabilen Composites durch die Verfahrensschritte:

I. Bereitstellung einer Epoxidharz-Zusammensetzung enthaltend

A) mindestens eine Epoxidverbindung
und

B) eine Härterzusammensetzung bestehend aus:

B1) 65-99 Gew.-%, mindestens eines Diamins und/oder Polyamins auf Basis von Triacetondiamin und
B2) 1-35 Gew.-% mindestens eines weiteren Diamins und/oder Polyamins ausgewählt aus Isophorondiamin,
4,4'-Diaminodicyclohexylmethan, 2,4'-Diaminodicyclohexylmethan 2,2'-Diaminodicyclohexylmethan, allein oder in Mischungen der Isomeren,
einer Mischung der Isomeren aus 2,2,4-Trimethylhexamethylendiamin und 2,4,4-Trimethylhexamethylendiamin,
Addukthärtern auf Basis der Umsetzungsprodukte von Epoxidverbindungen und Di- und/oder Polyaminen B2) oder einer Kombination der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1 zu 2 bis 2 zu 1 variiert, bevorzugt von 1,25 zu 1 bis 1:1;

C) 0,1 bis 10 Gew.-%, mindestens eines Härtungsbeschleunigers,
wobei sich die Mengen von A)-C) zu 100 Gew.-% addieren,

D) gegebenenfalls Zusatzstoffe.

II. Imprägnierung eines faserförmigen Trägers mit der Zusammensetzung aus I,

III. Umsetzung der Epoxidharz-Zusammensetzung aus I bei Temperaturen von 23-200°C, bevorzugt 23-160°C, besonders bevorzugt 23-120°C auf einen Umsatz von 1-90%, bevorzugt 50-80%, besonders bevorzugt 60-80%;

IV. Abwickeln oder Ablegen des lagerstabilen Composite.

Beschreibung der Herstellung von lagerstabilen SMC-Composites (SMC-Faser-Matrix-Halbzeuge)

Gegenstand der Erfindung ist auch ein Verfahren zur Herstellung von lagerstabile SMC Composites durch die Verfahrensschritte:

I. Bereitstellung einer Epoxidharz-Zusammensetzung enthaltend

A) mindestens eine Epoxidverbindung
und

B) eine Härterzusammensetzung bestehend aus:

B1) 65-99 Gew.-%, mindestens eines Diamins und/oder Polyamins auf Basis von Triacetondiamin
und

B2) 1-35 Gew.-% mindestens eines weiteren Diamins und/oder Polyamins ausgewählt aus Isophorondiamin,

4,4'-Diaminodicyclohexylmethan, 2,4'-Diaminodicyclohexylmethan 2,2'-Diaminodicyclohexylmethan, allein oder in Mischungen der Isomeren,

einer Mischung der Isomeren aus 2,2,4-Trimethylhexamethylendiamin und 2,4,4-Trimethylhexamethylendiamin,

Addukthärtern auf Basis der Umsetzungsprodukte von Epoxidverbindungen und Di- und/oder Polyaminen B2) oder

einer Kombination der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1 zu 2 bis 2 zu 1 variiert, bevorzugt von 1,25 zu 1 bis 1:1

C) 0,1 bis 10 Gew.% mindestens eines Härtungsbeschleunigers,
wobei sich die Mengen von A)-C) zu 100 Gew.-% addieren,

D) gegebenenfalls Zusatzstoffe.

II. Imprägnierung eines faserförmigen Trägers mit der Zusammensetzung aus I,

III. Umsetzung der Epoxidharz-Zusammensetzung aus I bei Temperaturen von 23-200°C auf einen Umsatz von 1-90 %,

IV. Ablegen der reaktiven SMC Composites.

Zur Herstellung der erfindungsgemäß eingesetzten Epoxidzusammensetzung I. wird zunächst die Härterkomponente B) hergestellt. Dazu können die flüssigen Bestandteile B1) und B2) und gegebenenfalls C) gemischt werden. Anschließend sind gegebenenfalls feste Anteile in der Mischung zu lösen. Das kann auch durch Erwärmen unterstützt werden.

Anschließend wird die Harzkomponente hergestellt, indem ggf. mehrere flüssige Epoxidharze A) miteinander vermischt werden. Anschließend sind gegebenenfalls feste Anteile in der Mischung zu lösen. Das kann auch durch Erwärmen unterstützt werden.

Es werden gegebenenfalls noch Hilfsstoffe der Komponente A) oder B) zugemischt und dispergiert. Die zwei Komponenten werden bis zu ihrer Anwendung getrennt gelagert. Zur Anwendung werden diese beiden Komponenten in an sich bekannter Weise miteinander gemischt. Dazu können gängige Mischaggregate verwendet werden, die dem Fachmann allgemein bekannt sind. Um eine niedrige Imprägnierviskosität zu haben, die bei 50 bis 3000 mPa*s liegt, bevorzugt bei 200 bis 1500 mPa*s, besonders bevorzugt bei 200 bis 1000 mPa*s, können die Einzelkomponenten vor dem Mischen auf 30-80°C, bevorzugt auf 30-40°C vorgewärmt werden. Das Gemisch wird in zwei Kastenrakel gegossen und auf zwei Trägerfolien verteilt. Anschließend wird eine Folie mit geschnittenen Fasern bestückt. Dann wird die zweite Trägerfolie mit dem Epoxidsystem auf die erste Folie gelegt. Der Schichtaufbau aus Epoxid und Fasern wird mithilfe von Walzen gut vermischt. Nach dem Durchmischen kann es gegebenenfalls zu einer thermisch initiierten Eindickung der Zusammensetzung kommen, indem das Faser-Matrix-Halbzeug z.B. durch eine Wärmekammer oder unter einer Infrarotlampe entlang fährt. Die Wärme führt bei Temperaturen von 50-200°C, bevorzugt 80-140°C zu einer Vorreaktion, infolgedessen die Viskosität ansteigt. Bei Verlassen z.B. der Wärmekammer oder der Infrarotlampe kühlt das Faser-Matrix-Halbzeug ab. Schließlich wird das Faser-Matrix-Halbzeug (SMC-Sheet) aufgewickelt. Dabei ist das Halbzeug bei -20°C-30°C für mehrere Monate lagerstabil.

In einer anderen Ausführung, wird das Faser-Matrix-Halbzeug nach dem Durchmischen an den Walzen nicht thermisch angedickt, sondern in Bahnen geschnitten und abgelegt. Diese Bahnen werden bei Temperaturen von 25-100°C, bevorzugt bei 25-50°C, besonders bevorzugt bei 25-35°C für 10min bis 7 Tage, bevorzugt 20min bis 3 Tage, besonders bevorzugt 60min bis 1 Tag gelagert, reifen dort und sind anschließend bei -20°C-30°C für mehrere Monate lagerstabil. Nach der beschriebenen Vorreaktion in einer Wärmekammer oder unter einer Infrarotlampe oder nach einer Reifezeit ist die Viskosität so angestiegen, dass beim anschließenden Verpressen bei z.B. 150°C die Matrix infolge einer ausreichend hohen Viskosität die Faser mittransportiert. Übertragen auf die Matrix wird daher mindestens eine Schmelzviskosität von 3000 mPa*s bei 150°C benötigt, die durch die beschriebene Vorreaktion in einer Wärmekammer oder unter einer Infrarotlampe oder nach einer Reifezeit erreicht wird.

Die Herstellung der ausgehärteten SMC-Composites-, also von Faserverbundbauteilen, kann wie folgt durchgeführt werden: Das lagerstabile, eingedickte SMC-Sheet wird in kleine Streifen geschnitten und in das Presswerkzeug gelegt. Dann wird die Presse zugefahren und die Sheets werden verpresst. Geeignete Härtungstemperaturen liegen zwischen 120°C und 180°C, bevorzugt 120 und 160°C, besonders bevorzugt 140°C und 150°C. Härtungszeiten liegen zwischen 1-60min, bevorzugt zwischen 1-20min, besonders bevorzugt zwischen 2-10min. Der Pressdruck liegt bei 40-120 bar, bevorzugt bei 60-80 bar.

Die Zusammensetzung I weist eine Glasübergangstemperatur (Tg) von 50-220°C auf, bevorzugt von 80 bis 160°C.

Beschreibung der Herstellung von lagerstabilen Prepregs

Gegenstand der Erfindung ist auch ein Verfahren zur Herstellung von lagerstabile Prepregs durch die Verfahrensschritte:

I. Bereitstellung einer Epoxidharz-Zusammensetzung enthaltend

A) mindestens eine Epoxidverbindung
und

B) eine Härterzusammensetzung bestehend aus:

B1) 65-99 Gew.-%, mindestens eines Diamins und/oder Polyamins auf Basis von Triacetondiamin und
B2) 1-35 Gew.-% mindestens eines weiteren Diamins und/oder Polyamins ausgewählt aus
Isophorondiamin,
4,4'-Diaminodicyclohexylmethan, 2,4'-Diaminodicyclohexylmethan 2,2'-Diaminodicyclohexylmethan, allein oder in Mischungen der Isomeren,
einer Mischung der Isomeren aus 2,2,4-Trimethylhexamethylendiamin und 2,4,4-Trimethylhexamethylendiamin,
Addukthärtern auf Basis der Umsetzungsprodukte von Epoxidverbindungen und Di- und/oder Polyaminen B2) oder
einer Kombination der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1 zu 2 bis 2 zu 1 variiert, bevorzugt von 1,25 zu 1 bis 1:1

C) 0,1 bis 10 Gew.% mindestens eines Härtungsbeschleunigers,
wobei sich die Mengen von A)-C) zu 100 Gew.-% addieren,

D) gegebenenfalls Zusatzstoffe.

II. Imprägnierung eines faserförmigen Trägers mit der Zusammensetzung aus I,
III. Umsetzung der Epoxidharz-Zusammensetzung aus I bei Temperaturen von 23-200°C auf einen Umsatz von 1-90 %,
IV. Ablegen des reaktiven Prepregs.

Zur Herstellung der erfindungsgemäß eingesetzten Epoxidzusammensetzung wird zunächst die Härterkomponente B) hergestellt. Dazu können die flüssigen Bestandteile B1) und B2) und gegebenenfalls C) gemischt werden. Anschließend sind gegebenenfalls feste Anteile in der Mischung zu lösen. Das kann auch durch Erwärmen unterstützt werden.

Anschließend wird die Harzkomponente hergestellt, indem ggf. mehrere flüssige Epoxidharze A) miteinander vermischt werden. Anschließend sind gegebenenfalls feste Anteile in der Mischung zu lösen. Das kann auch durch Erwärmen unterstützt werden.

Es werden noch Hilfsstoffe der Komponente A) oder B) zugemischt und dispergiert.

Die zwei Komponenten werden bis zu ihrer Anwendung getrennt gelagert. Zur Anwendung werden diese beiden Komponenten in an sich bekannter Weise miteinander gemischt. Dazu können gängige Mischaggregate verwendet werden, die dem Fachmann allgemein bekannt sind. Um eine niedrige Imprägnierviskosität zu haben, die bei 50 bis 3000 mPa*s liegt, bevorzugt bei 200 bis 1500 mPa*s, besonders bevorzugt bei 200 bis 1000 mPa*s, können die Einzelkomponenten vor dem Mischen auf 30-80°C, bevorzugt auf 30-40°C vorgewärmt werden. Zudem kann dem Gemisch gegebenenfalls Lösemittel zugegeben werden.

Die Herstellung der Prepregs erfolgt in einer dafür vorgesehenen Faser-Imprägnieranlage. Zur Herstellung wird das Gemisch in eine Harzwanne innerhalb der Imprägnieranlage gegossen. Das Fasermaterial wird durch die Harzwanne geführt, mit dem Gemisch imprägniert und passiert anschließend zwei Quetschwalzen. An den Quetschwalzen wird überschüssiges Harzmaterial abgequetscht. So wird der Faservolumenanteil der Halbzeuge reguliert. Anschließend wird das Harzmaterial z.B. durch einen beheizten Ofen geführt, sodass einerseits gegebenenfalls vorhandenes Lösemittel entfernt wird und andererseits eine Vorreaktion abläuft. Die Ofenwärme führt bei Temperaturen von 50-200°C, bevorzugt 80-160°C zu einer Vorreaktion und ggf. zum Entweichen des Lösemittels aus dem Faser-Matrix-Halbzeug, infolgedessen die Viskosität ansteigt. Bei Verlassen z.B. des Ofens kühlt das Faser-Matrix-Halbzeug ab. Schließlich wird das Faser-Matrix-Halbzeug aufgewickelt. Dabei ist das Halbzeug bei -20°C-30°C für mehrere Monate lagerstabil.

In einer anderen Ausführung enthält die Zusammensetzung kein Lösemittel und wird nach der Quetschwalze mit einer Folie abgedeckt und in Bahnen geschnitten und abgelegt. Diese Bahnen werden bei Temperaturen von 25-100°C, bevorzugt bei 25-50°C, besonders bevorzugt bei 25-35°C für 10min bis 7 Tage, bevorzugt 20min bis 3 Tage, besonders bevorzugt 60min bis 1 Tag gelagert und sind anschließend bei -20°C-30°C für mehrere Monate lagerstabil.

Die Herstellung von ausgehärteten Composites, also von Faserverbundbauteilen, kann wie folgt durchgeführt werden: Das lagerstabile, eingedickte Prepreg wird passend zur Pressform zugeschnitten und in das Presswerkzeug gelegt. Dann wird die Presse zugefahren und die Prepregs werden verpresst. Geeignete Härtungstemperaturen liegen zwischen 120°C und 200°C, bevorzugt 120 und 180°C, besonders bevorzugt 140°C und 160°C. Härtungszeiten liegen zwischen 1-60min, bevorzugt zwischen 1-20min, besonders bevorzugt zwischen 2-10min. Der Pressdruck liegt bei 1-120 bar, bevorzugt bei 10-80 bar.

Die Zusammensetzung I weist eine Glasübergangstemperatur (Tg) von 50-220°C auf, insbesondere von 80 bis 160°C.

**Beispiele**

Die in den folgenden Beispielen genutzten Einsatzstoffe sind in Tabelle 1 erklärt.

Tab1.: Einsatzstoffe

| Handelsname | Lieferant | Chemische Bezeichnung | Abkürzung |
|---|---|---|---|
| Triacetondiamin | Evonik Industries | 2,2,6,6-Tetramethyl-4-aminopiperidin | TAD |
| VESTAMIN® IPD | Evonik Industries | 3-Aminomethyl-3,5,5-trimethylcyclohexylamin | IPD |
| Cardura E10P | Möller Chemie | Neodecansäure-Oxiranylmethylester | - |
| Epikote® 828 | Hexion | Epoxidharz aus Bisphenol A und Epichlorhydrin | - |
| Araldite® XB 9721 | Huntsman | 4,4'-Methylenebis[N,N-bis(2,3-epoxypropyl)aniline] | - |
| 2-Ethyl-4-Methylimidazol | Sigma Aldrich | 2-Ethyl-4-Methylimidazol | 2,4-EMI |
| PAT 657 BW | E. und P. Würtz | Gemisch: Gleit- und Trennmittel | - |
| Millicarb® OG | OMYA | Calciumcarbonat (Füllstoff) | Millicarb |

(fortgesetzt)

| Handelsname | Lieferant | Chemische Bezeichnung | Abkürzung |
|---|---|---|---|
| Dimethylformamid | Carl Roth GmbH & Co KG | Dimethylformamid | DMF |
| Isopropylacetat | Thermo Fischer (Kandel) GmbH | Isopropylacetat | - |

Beispiel 1:

In einem Glaskolben wurde 600g TAD (primäre Amingruppen: 3,8mol)vorgelegt und 184,2g Cardura E10P (0,76mol Epoxidgruppen) bei 30°C in 30min zugetropft. Die Reaktionsmischung wurde über Nacht stehen gelassen. Die Aminzahl lag bei 541 mg KOH/g.

Beispiel 2:

Zur Herstellung der Harzkomponente A) wurden 3,3kg Araldite XB 9721 (29,5mol Epoxidgruppen) auf 60°C vorgewärmt und dann mit 1,3kg Epikote 828 (6,9mol Epoxidgruppen) gemischt.

Zur Herstellung der Härterkomponente B) wurden 34,6g 2,4-EMI in 1,92kg TAD (12,3mol primäre Amingruppen) bei 40°C gelöst. Anschließend wurden 0,59kg des TAD-Adduktes (2,3mol primäre Amingruppen) aus Beispiel 1 und 70g PAT 657 BW zugegeben. Der Härter wurde nochmal bei Raumtemperatur gemischt.

Beispiel 3:

Als Harzkomponente wurden 5,5kg Epikote 828 (29,3mol Epoxidgruppen) eingesetzt

Zur Herstellung der Härterkomponente wurden 1,34kg TAD (8,6mol primäre Amingruppen) mit 0,15kg IPD (1,8mol primäre Amingruppen) bei Raumtemperatur vermischt. Dann wurden 34,3g 2,4-EMI zugegeben und bei 40°C gelöst. Anschließend wurden 70g PAT 657 BW zugegeben und es wurde nochmal bei Raumtemperatur gemischt.

Beispiel 4:

Als Harzkomponente wurden 5,5kg Epikote 828 eingesetzt

Zur Herstellung der Härterkomponente wurden 1,34kg TAD mit 0,15kg IPD bei Raumtemperatur vermischt. Dann wurden 68,6g 2,4-EMI zugegeben und bei 40°C gelöst. Anschließend wurden 70g PAT 657 BW zugegeben und es wurde nochmal bei Raumtemperatur gemischt.

Beispiel 5:

Zur Herstellung der Harzkomponente wurden 5,5kg Epikote 828 mit 1,75kg Isopropylacetat vermischt.

Zur Herstellung der Härterkomponente wurden 1,35kg TAD mit 0,15kg IPD bei Raumtemperatur vermischt. Dann wurden 14g 2,4-EMI zugegeben und bei 40°C unter Rühren gelöst.

Beispiel 6:

Als Harzkomponente wurden 5,5kg Epikote 828 eingesetzt.

Zur Herstellung der Härterkomponente wurden 1,35kg TAD mit 0,15kg IPD bei Raumtemperatur vermischt. Dann wurden 14g 2,4-EMI zugegeben und bei 40°C unter Rühren gelöst.

Beispiel 14:

Als Harzkomponente wurden 5,5kg Epikote 828 (29,3mol Epoxidgruppen) eingesetzt

Zur Herstellung der Härterkomponente wurden 1,16kg TAD (7,4mol primäre Amingruppen) mit 0,29kg IPD (3,4mol primäre Amingruppen) bei Raumtemperatur vermischt. Dann wurden 69,7g 2,4-EMI zugegeben und bei 40°C gelöst. Anschließend wurden 70g PAT 657 BW zugegeben und es wurde nochmal bei Raumtemperatur gemischt.

**Herstellung von lagerstabilen SMC-Composites und SMC-Laminaten**

Beispiel 7:

Die Harzkomponente aus Beispiel 2 wurde auf 40°C erwärmt und mit der Härterkomponente aus Beispiel 2 mithilfe eines Dissolvers gemischt. Das Gemisch wurde in zwei Kastenrakel gegossen und auf zwei Trägerfolien verteilt. Anschließend wurde eine Folie mit geschnittenen Carbonfasern bestückt. Dann wurde die zweite Trägerfolie mit dem Epoxidsystem auf die erste Folie gelegt. Der Schichtaufbau aus Epoxid und Fasern wurde mithilfe von Walzen gut vermischt. Anschließend wurden die SMC-Sheets in Bahnen geschnitten und abgelegt. Der Carbonfasermasseanteil lag bei 60%.

Die SMC-Bahnen wurden bei ca. 25°C für 3 Tage gelagert. Dann wurden die Sheets in kleine Streifen ä 10cm x 20cm geschnitten. Es wurden 4 dieser Streifen übereinander gepackt und in ein Plattenpresswerkzeug gelegt. Die Presse wurde bei 150°C temperiert. Die Presse fuhr zu und die Sheets wurden zu einem Laminat gepresst. Nach 10min konnten die Sheets entnommen und charakterisiert werden. Der Pressdruck lag bei 80bar.

Beispiel 8:

Die Harzkomponente aus Beispiel 2 wurde auf 40°C erwärmt und zunächst mit Millicarb mithilfe eines Dissolvers vermengt. Dabei wurde die Menge an Millicarb so gewählt, dass Matrix und Füllstoff im Verhältnis 1:1 vorliegen. Dann wurde die Mischung aus Harz und Füller mit der Härterkomponente aus Beispiel 2 mit dem Dissolver gemischt. Das Gemisch wurde in zwei Kastenrakel gegossen und auf zwei Trägerfolien verteilt. Anschließend wurde eine Folie mit geschnittenen Glasfasern bestückt. Dann wurde die zweite Trägerfolie mit dem Epoxidsystem auf die erste Folie gelegt. Der Schichtaufbau aus Epoxid und Fasern wurde mithilfe von Walzen gut vermischt. Anschließend wurden die SMC-Sheets in Bahnen geschnitten und abgelegt. Der Glasfasermasseanteil lag bei 30%.

Die Lagerung und das Verpressen der SMC-Bahnen erfolgten wie in Beispiel 7 beschrieben.

Beispiel 9:

Die Herstellung von SMC-Sheets und Presslaminaten erfolgte analog zu Beispiel 7 mit der Zusammensetzung aus Beispiel 3 als Matrix. Es wurde Carbonfaser eingesetzt.

Beispiel 10:

Die Herstellung von SMC-Sheets und Presslaminaten erfolgte analog zu Beispiel 8 mit der Zusammensetzung aus Beispiel 3 als Matrix. Es wurde Glasfaser eingesetzt.

Beispiel 11:

Die Harzkomponente aus Beispiel 4 wurde auf 30°C erwärmt und mit der Härterkomponente aus Beispiel 4 mithilfe eines Dissolvers gemischt. Das Gemisch wurde in zwei Kastenrakel gegossen und auf zwei Trägerfolien verteilt. Anschließend wird eine Folie mit geschnittenen Carbonfasern bestückt. Dann wurde die zweite Trägerfolie mit dem Epoxidsystem auf die erste Folie gelegt. Der Schichtaufbau aus Epoxid und Fasern wurde mithilfe von Walzen gut vermischt. Anschließend wurden die SMC-Sheets in Bahnen geschnitten und abgelegt. Der Carbonfasermasseanteil lag bei 60%.

Die SMC-Bahnen wurden bei ca. 25°C für 3 Tage gelagert. Dann wurden die Sheets in kleine Streifen ä 10cm x 20cm geschnitten. Es wurden 4 dieser Streifen übereinander gepackt und in ein Plattenpresswerkzeug gelegt. Die Presse wurde bei 150°C temperiert. Die Presse fuhr zu und die Sheets wurden zu einem Laminat gepresst. Nach 5min konnten die Sheets entnommen und charakterisiert werden. Der Pressdruck lag bei 80bar.

**Herstellung von lagerstabilen Prepregs und Prepreg-Laminaten**

Beispiel 12:

Die Harz- und Härterkomponenten aus Beispiel 5 wurden mithilfe eines Speedmixers bei Raumtemperatur gemischt. Dann wurde die Mischung in die Harzwanne einer Imprägnieranlage (Basecoater der Firma Coatema) gegossen. Es wurde ein biaxiales Carbon-Gelege (Toray T700, +/-45 Biax, Flächengewicht: 308 g/m$^2$) durch die Harzwanne

geführt, mit dem Gemisch imprägniert und passierte anschließend zwei Quetschwalzen. An den Quetschwalzen wurde überschüssiges Harzmaterial abgequetscht. Anschließend wurde das Halbzeug für 20min durch einen Ofen geführt. Das Gebläse im Ofen war auf 100°C eingestellt. Dort wurde das Lösemittel entfernt und die Vorreaktion durchgeführt. Bei Verlassen des Ofens kühlte das Faser-Matrix-Halbzeug schnell ab und war trocken. Schließlich wurde das Faser-Matrix-Halbzeug aufgewickelt. Das Flächengewicht des Halbzeugs lag bei 610 g/m$^2$.

Zur Herstellung von Prepreg-Laminaten wurden die Prepregs passend zur Pressform zurecht geschnitten und in das Presswerkzeug eingelegt. Die Presse war bei 140°C beheizt. Die Presse wurde zugefahren und das Prepreg gehärtet. Die Presse konnte nach 60min wieder geöffnet und das gehärtete Laminat entnommen werden. Der Pressdruck lag bei 15bar.

Beispiel 13:

Die Herstellung von Prepregs und Prepreglaminaten erfolgte analog zu Beispiel 12 mit der Zusammensetzung aus Beispiel 6 als Matrix. Es wurde ein Carbon-Biax eingesetzt.

**Vergleichsbeispiele (nicht erfindungsgemäß)**

Vergleichsbeispiel 1

Als Harzkomponente wurden 5,5kg Epikote 828 eingesetzt.
Zur Herstellung der Härterkomponente wurden 1,52kg TAD mit 70g PAT 657 BW bei Raumtemperatur gemischt.

Vergleichsbeispiel 2

Als Harzkomponente wurden 5,5kg Epikote 828 eingesetzt.
Zur Herstellung der Härterkomponente wurden 1,52kg TAD auf 40°C erwärmt und 35g 2,4-EMI unter Rühren gelöst. Anschließend wurden der Mischung 70g PAT 657 BW bei Raumtemperatur zugemischt.

Vergleichsbeispiel 3

Als Harzkomponente wurden 7kg Epikote 828 eingesetzt.
Der Härter bestand aus 0,455kg Dicyandiamid und 0,065kg 2,4-EMI.

Vergleichsbeispiel 4

Als Harzkomponente wurden 7 kg Epikote 828 eingesetzt.
Der Härter bestand aus 0,43kg Dicyandiamid, 0,043kg IPD und 0,06kg 2,4-EMI.

Vergleichsbeispiel 5

Als Harzkomponente wurden 7kg Epikote 828 eingesetzt.
Der Härter bestand aus 0,455kg Dicyandiamid und 1,49g 2,4-EMI. Die festen Bestandteile wurden in 5kg Dimethylformamid bei 40°C gelöst.

**Herstellung von SMC-Sheets und Prepregs aus den Vergleichsbeispiele 1-5**

Vergleichsbeispiel 6:

Die Herstellung von SMC-Sheets und Presslaminaten erfolgte analog zu Beispiel 8 mit der Zusammensetzung aus Vergleichsbeispiel 1 als Matrix.

Vergleichsbeispiel 7:

Die Herstellung von SMC-Sheets und Presslaminaten erfolgte analog zu Beispiel 8 mit der Zusammensetzung aus Vergleichsbeispiel 2 als Matrix.

Vergleichsbeispiel 8:

Die Herstellung von Prepregs und Prepreglaminaten erfolgte analog zu Beispiel 12 mit der Zusammensetzung aus Vergleichsbeispiel 1 als Matrix. Es wurde ein Carbon-Biax eingesetzt.

Vergleichsbeispiel 9:

Die Harz- und Härterkomponenten aus Vergleichsbeispiel 5 wurden mithilfe eines Speedmixers bei Raumtemperatur gemischt. Dann wurde die Mischung in die Harzwanne einer Imprägnieranlage (Basecoater der Firma Coatema) gegossen. Es wurde ein biaxiales Carbon-Gelege **(Toray T700, +/-45 Biax, Flächengewicht:** 308g/m$^2$) durch die Harzwanne geführt, mit dem Gemisch imprägniert und passierte anschließend zwei Quetschwalzen. An den Quetschwalzen wurde überschüssiges Harzmaterial abgequetscht

Anschließend wurde das Halbzeug für 20min durch einen Ofen geführt. Das Gebläse im Ofen war auf 130°C eingestellt. Dort wurde das Lösemittel entfernt und die Vorreaktion durchgeführt. Bei Verlassen des Ofens kühlte das Faser-Matrix-Halbzeug schnell ab und war trocken. Schließlich wurde das Faser-Matrix-Halbzeug aufgewickelt. Das Flächengewicht des Halbzeugs lag bei 580g/m$^2$.

Zur Herstellung von Prepreg-Laminaten wurden die Prepregs passend zur Pressform zurecht geschnitten und in das Presswerkzeug eingelegt. Die Presse war bei 140°C beheizt. Die Presse wurde zugefahren und das Prepreg gehärtet. Die Presse konnte nach 60min wieder geöffnet und das gehärtete Laminat entnommen werden. Der Pressdruck lag bei 15bar.

## Messmethoden

Zur Charakterisierung der Epoxidsysteme, SMC-Sheets, Prepregs, und aus SMC-Sheets und Prepregs hergestellten Composites wurden folgende Geräte und Methoden benutzt:

Rheometer MCR 301 von Anton-Paar Parameter (Umgang beschrieben in DIN 53019) Erste Methode für SMC-Matrix: Platte-Platte, isotherm, Amplitude Gamma = 2%, Frequenz f = 1 Hz, Messpunktdauer: 5 s. Bestimmung der Gelzeit (wenn Speichermodul = Verlustmodul) und der Anfangsviskosität (geringste gemessene Viskosität) bei Temperaturen ≥100°C.

Zweite Methode für Prepregs: Platte-Platte, Temperaturrampe von 80-180°C, 5K/min, Amplitude Gamma = 2%, Frequenz f = 1 Hz, Messpunktdauer 5s. Bestimmung der Gelzeit (wenn Speichermodul = Verlustmodul).

Brookfield Rotationsviskosimeter RC30 von Rheotec (Umgang beschrieben in DIN 53019) Konzentrischer Zylinder, isotherm, Messpunktdauer 10 s.

Bestimmung der Anfangsviskosität (geringste gemessene Viskosität) bei Temperaturen <100°C

Mettler DSC (Umgang beschrieben in DIN 11357)

Temperatur -30 bis +250°C, Aufheizrate 10 K/ min

Bestimmung der Glasübergangstemperatur (Tg), Halbstufenmethode, Mittelpunkt DIN 51007 und der Reaktionsenthalpie (exothermer Wärmestrom)

Bestimmung des Umsatzes:

$$\left(1 - \left(\frac{exothermer\ Wärmestrom\ nach\ Härtung}{exothermer\ Wärmestrom\ vor\ Härtung}\right)\right) * 100\%$$

Zugversuche gemäß DIN EN ISO 527

Biegeversuche gemäß DIN EN ISO 14125

Kurzstabbiegeversuche zur Bestimmung der scheinbaren interlaminaren Scherfestigkeit (ILSS) gemäß DIN EN ISO 14130

## Ergebnisse

Ergebnisse zu Beispiel 2-4, 7-11 (SMC-Sheets) und Vergleichsbeispielen 1-4

Formulierungen aus Beispiel 2-4 und Formulierungen aus Vergleichsbeispielen 1 bis 4 wurden gemischt und mittels DSC und Rheometer charakterisiert, um die Ausgangseigenschaften und die Lagerstabilität zu ermitteln. Als Ausgangseigenschaft wurde in Tab.2 die Anfangsmischviskosität bei 30°C dargestellt.

Tab.2: Mischviskositäten der Harz/Härter-Mischungen aus Bsp. 2-4,14 und Vergleichsbeispiel 1-4 bei 30°C

| | Bsp.2 | Bsp.3 | Bsp.4 | Bsp. 14 | Vergleichs-Bsp.1 | Vergleichs-Bsp.2 | Vergleichs-Bsp.3 | Vergleichs-Bsp4 |
|---|---|---|---|---|---|---|---|---|
| Viskosität bei 30°C [mPa*s] | 380 | 840 | 850 | 930 | 700 | 710 | 7030 | 8320 |

Die Beispiele 2-4 und 14 zeigen bei 30°C eine Viskosität unter 1000 mPa*s. Vergleichsbeispiel 1 und 2 zeigen ebenfalls eine Viskosität unter 1000 mPa*s. Vergleichsbeispiel 3 und 4 zeigen eine Anfangsviskosität über 1000 mPa*s und sind daher in Bezug auf die Faserimprägnierung weniger gut geeignet.

Die Lagerstabilität wurde überprüft, indem die Mischungen für mehrere Wochen bei Raumtemperatur gelagert und in regelmäßigen Abstanden mittels Rheometer bei 150°C hinsichtlich Viskosität und mittels DSC hinsichtlich Tg untersucht wurden. Die Ergebnisse sind in Tab.3 und Tab.4 dargestellt.

Tab.3: Mischviskositäten von Mischungen aus Bsp. 2-4,14 und Vergleichsbeispiel 1-4 bei 150°C (Lagerung bei 23°C)

| Viskosität bei 150°C [mPa*s] | Bsp.2 | Bsp.3 | Bsp.4 | Bsp.14 | Vergl.-Bsp.1 | Vergl.-Bsp.2 | Vergl.-Bsp.3 | Vergl.--Bsp.4 |
|---|---|---|---|---|---|---|---|---|
| Nach 0d (nach Herstellung) | <10 | 20 | 137 | 16 | 20 | 13 | 23 | 31 |
| Nach 1d | 176 | 1166 | 1036 | 580 | 230 | 341 | 34 | 26 |
| Nach 7d | 4865 | 4847 | 5930 | 3340 | 1650 | 2373 | 71 | 3470 |
| Nach 14d | 5701 | 5664 | 7431 | 6480 | 2387 | 3640 | 26.117.000 | 38.370.000 |
| Nach 21d | 5861 | 5845 | 7643 | 7370 | 2626 | - | - | - |
| Nach 28d | 6020 | 6105 | 7952 | 7640 | 3151 | - | - | - |

Wie in Tabelle 3 zu erkennen ist, zeigen die Beispiele 2-4 und 14 direkt nach Herstellung noch eine sehr niedrige Schmelzviskosität bei 150°C, die aber bereits nach einem Tag (d) deutlich ansteigt. Nach 7 Tagen liegt die Schmelzviskosität für die Beispiele 2-4 und 14 über 3000 mPa*s. Die Vergleichsbeispiele 1, 2 und 3 haben nach 7 Tagen hingegen noch eine Schmelzviskosität unterhalb von 3000 mPa*s. Die Schmelzviskosität ist damit zu niedrig, sodass die Matrix beim anschließenden Verpressen zu stark fließen würde. Nach 14 Tagen ist die Schmelzviskosität von Vergleichsbeispiel 3 und 4 oberhalb von 10.000.000 mPa*s und damit zu hoch. Zudem ist kein Erreichen eines Viskositätsplateaus für die Beispiele 3 und 4 zu erkennen, sodass die Formulierungen als nicht lagerstabil angesehen werden können. Die Beispiele 2-4 und 14 hingegen erreichen spätestens nach 14 Tagen ein Viskositätsplateau.

Tab.4: DSC-Untersuchungen von Mischungen aus Bsp. 2-4,14 und Vergleichsbeispiel 1-4 nach Lagerung bei 23°C

| Tg, [°C] (DSC, 1. Heizen) | Bsp.2 | Bsp.3 | Bsp.4 | Bsp.14 | Vergl.-Bsp.1 | Vergl.-Bsp.2 | Vergl.-Bsp.3 | Vergl..-Bsp.4 |
|---|---|---|---|---|---|---|---|---|
| Nach 0d (nach Herstellung) | -18 | -13 | -14 | -18 | -20 | -18 | -19 | -17 |
| Nach 1d | 15 | 31 | 30 | 25 | 28 | 31 | -15 | -14 |
| Nach 7d | 47 | 49 | 50 | 49 | 46 | 48 | -7 | 0 |
| Nach 14d | 51 | 54 | 52 | 54 | 50 | 54 | 18 | 27 |
| Nach 21d | 53 | 56 | 55 | 54 | 52 | - | - | - |
| Nach 28d | 55 | 59 | 60 | 58 | 54 | - | - | - |

Die DSC-Untersuchungen in Tabelle 4 zeigen für die Beispiele 2-4 und 14, dass die Tg zunächst steigt und sich dann nach ca. 7 Tagen (d) bei 50 bis 60°C einpendelt. Das gleiche Verhalten wird für die Vergleichsbeispiele 1 und 2 beobachtet. Für Vergleichsbeispiel 3 und 4 kann hingegen kein Einpendeln auf ein bestimmtes Tg-Niveau beobachtet werden. Damit ist auch in der DSC keine Lagerstabilität für Vergleichsbeispiel 3 und 4 zu beobachten.

SMC-Sheets gemäß Beispiel 7-11 zeigten aufgrund der niedrigen Ausgangsviskosität eine sehr gute Faserbenetzung. Sie wurden nach einer Lagerzeit von 3 Tagen verpresst. Von den erstellten Laminaten wurden mechanische Eigenschaften ermittelt, die in Tab. 5 dargestellt sind.

Tab.5: Mechanische Eigenschaften von SMC-Bauteilen gemäß Beispiel 7-11

|  | Einheit | Bsp. 7 | Bsp. 8 | Bsp. 9 | Bsp. 10 | Bsp. 11 |
|---|---|---|---|---|---|---|
| Testplattengröße | mm | 250 x 120 | | | | |
| Biegefestigkeit | MPa | 530 | 393 | 664 | 463 | 636 |
| Biegemodul | GPa | 33 | 14 | 30 | 13 | 32 |
| Zugfestigkeit | MPa | 188 | 148 | 265 | 212 | 237 |
| Zugmodul | GPa | 33 | 17 | 42 | 22 | 43 |
| Bruchdehnung | % | 0,6 | 1,6 | 0,7 | 1,6 | 0,6 |

SMC-Sheets gemäß Vergleichsbeispiel 6 und 7 wurden nach einer Lagerzeit von 3 Tagen bei 150°C verpresst. Aufgrund der niedrigen Schmelzviskosität konnten keine Laminate hergestellt und keine mechanischen Eigenschaften bestimmt werden.

Ergebnisse zu Beispiel 5-6, 12-13 (Prepregs) und Vergleichsbeispielen 1 und 4

Zu den erfindungsgemäßen Beispielen 5 und 6 und zu den Vergleichsbeispielen 1 und 5 wurden zunächst die Anfangsviskositäten gemessen. Sie sind in Tabelle 6 dargestellt.

Tab.6: Ausgangsviskositäten von Bsp. 5 und 6, und Vergleichsbsp. 1 und 5

|  | Bsp.5 | Bsp.6 | Vergleichs-Bsp.1 | Vergleichs-Bsp.5 |
|---|---|---|---|---|
| Lösemittelanteil | 20% | 0% | 0% | 40% |
| Viskosität bei 23°C [mPa*s] | 32 | 1343 | 1263 | 180 |
| Viskosität bei 40°C [mPa*s] | - | 281 | - | - |

Beispiel 5 hat mit einem Lösemittelanteil von 20% eine sehr niedrige Viskosität bei 23°C und ist somit für die Imprägnierung von Fasern geeignet. Beispiel 6 ohne Lösemittel hat eine entsprechend höhere Viskosität. Durch Erhöhung der Imprägniertemperatur von Raumtemperatur auf 40°C sinkt die Viskosität auf 281 mPa*s, was ebenfalls für eine gute Imprägnierung von Fasern ausreichend ist. Gleiches gilt für Vergleichsbeispiel 1 auf Basis TAD. Vergleichsbeispiel 5 auf Basis DiCy besitzt nur dann eine niedrige Viskosität, wenn der Lösemittelanteil sehr hoch ist (40%). Als Lösemittel wurde DMF gewählt. Alternativ können für DiCy auch weniger gesundheitsgefährliche Lösemittel wie Aceton verwendet werden. In dem Falle wird aber mehr Lösemittel gebraucht (Löslichkeit von DiCy: 27,2g in 100g DMF, 0,8g in 100g Aceton; Quelle: Technisches Datenblatt Dicyandiamide, Alz Chem).

Zur Bestimmung der Restenthalpie der Prepreg-Matrix wurde von den Prepregs Matrixmaterial von den Fasern gelöst und dann analysiert.

Tab.7: Restenthalpie nach Prepregherstellung

|  | Bsp.12 | Vergleichs-Bsp.9 |
|---|---|---|
| Rest-Exothermie nach Prepregherstellung | 95 J/g | 184 J/g |
| Exothermie der Matrix vor Prepreg-Herstellung | 418 J/g | 454 J/g |
| Umsatz | 77% | 59% |

Tabelle 7 zeigt die Reaktionsenthalpie der erfindungsgemäßen Matrix im Vergleich zu einer Matrix auf DiCy-Basis. Die Gesamtenthalpie vor der Reaktion ist etwa auf gleichem Niveau. Als Prepreg zeigt die erfindungsgemäße Zusammensetzung aus Beispiel 12 allerdings nur noch halb so viel Exothermie wie ein DiCy-Prepreg in Vergleichsbeispiel 9, was zu mehr Prozesssicherheit bei der Herstellung von Laminaten führt, da weniger Wärme frei wird.

Zur Bestimmung der Lagerstabilität der Prepregs wurde Matrixmaterial von den Fasern gelöst und dann analysiert.

Tab. 8: Lagerstabilität von Prepregs

|  | Bsp.12 | Bsp.13 | Vergleichs-Bsp. 8 | Vergleichs.-Bsp.9 |
|---|---|---|---|---|
| Nach 1d Gelzeit Temperatur bei Gelzeit | 10min, 56sec 135°C | 6min, 12sec 110°C | 13min, 36sec 147°C | 11min, 38sec |
| Nach 7d Gelzeit Temperatur bei Gelzeit | 10min, 48sec 133°C | 6min, 6sec 109,6 | 13min, 12sec 146°C | 10min, 34sec 133°C |
| Nach 21d Gelzeit Temperatur bei Gelzeit | 10min, 36sec 132°C | 5min, 6sec 106°C | 13min, 5sec 144°C | 8min, 23sec 122°C |

Wie in Tabelle 8 zu erkennen verändern sich die Werte für die Gelzeit über die Lagerungszeit von 21 Tagen hinweg nur geringfügig für die Beispiele 12 und 13 und für das Vergleichsbeispiel 8. Für Vergleichsbeispiel 9 ändern sich die Gelzeiten über 21 Tage hingegen wesentlich stärker, was auf eine geringe Lagerstabilität schließen lässt.

In Tabelle 9 wurden die Verarbeitungsviskositäten der Prepregmatrices bei 140°C bestimmt. Dazu wurde Matrixmaterial von den Fasern gelöst und dann analysiert.

Tab.9: Verarbeitungsviskosität bei 140°C nach 1d

|  | Bsp.12 | Bsp.13 | Vergleichs-Bsp. 8 |
|---|---|---|---|
| Anfangsviskosität bei 140°C | 3210 | 3640 | 1940 |

Wie in Tabelle 9 dargestellt, liegt die Verarbeitungsviskosität für die Beispiele 12 und 13 bei 140°C oberhalb von 3000 mPa*s. Daher waren die Prepregs gut verpressbar ohne dass zu viel Harz aus der Form heraus floss. Mechanische Kenndaten zu den Beispielen 12 und 13 sind in Tabelle 10 zu finden. Vergleichsbeispiel 8 hat hingegen eine wesentlich geringere Viskosität. Dies führte beim Verpressen zu starkem Harzfluss.

Tab.10: Mechanische Eigenschaften von Laminaten auf Basis von Beispiel 12 und 13

|  | Bsp.12 | Bsp.13 |
|---|---|---|
| Zugfestigkeit [MPa] | 856 | 878 |
| Zugmodul [GPa] | 55,8 | 56,2 |
| Bruchdehnung [%] | 1,7 | 1,5 |
| Biegefestigkeit [MPa] | 813 | 827 |
| Biegemodul [GPa] | 49,4 | 49,7 |
| ILSS | 62 | 66 |

**Patentansprüche**

1. Epoxidharz-Zusammensetzung enthaltend:

    A) mindestens eine Epoxidverbindung
    und
    B) eine Härterzusammensetzung bestehend aus:

        B1) 65-99% mindestens eines Polyamins auf Basis von Triacetondiamin

und

B2) 1-35% mindestens einer Verbindung mit mindestens einer gegenüber Epoxidgruppen der Komponente A) reaktiven funktionellen Gruppe ausgewählt aus Isophorondiamin, 4,4'-Diaminodicyclohexylmethan, 2,4'-Diaminodicyclohexylmethan 2,2'-Diaminodicyclohexylmethan, allein oder in Mischungen der Isomeren,

einer Mischung der Isomeren aus 2,2,4-Trimethylhexamethylendiamin und 2,4,4-Trimethylhexamethylendiamin,

Addukthärtern auf Basis der Umsetzungsprodukte von Epoxidverbindungen und Di- und/oder Polyaminen B2) oder

einer Kombination der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1 zu 2 bis 2 zu 1 variiert,

C) 0,1-10 Gew.-% mindestens eines Härtungsbeschleunigers,

wobei sich die Mengen von A)-C) zu 100 Gew.-% addieren,

D) gegebenenfalls Zusatzstoffe.

2. Epoxidharz-Zusammensetzung nach Anspruch 1 **dadurch gekennzeichnet, dass** Epoxyverbindungen A) auswählt aus gesättigten, ungesättigten, aliphatischen, cycloaliphatischen, aromatischen, oder heterocyclischen Epoxyverbindungen enthalten sind und diese auch Hydroxylgruppen aufweisen können.

3. Epoxidharz-Zusammensetzung nach mindestens einem der vorherigen Ansprüche, **dadurch gekennzeichnet, dass** Epoxyverbindungen A) ausgewählt aus Glycidylethern, Glycidylestern, aliphatischen Epoxiden, Diglycidylethern auf Basis Bisphenol A und/oder Bisphenol F, Glycidylmethacrylaten enthalten sind.

4. Epoxidharz-Zusammensetzung nach mindestens einem der vorherigen Ansprüche, **dadurch gekennzeichnet, dass** Polyamine auf Basis von Triacetondiamin B1) ausgewählt aus 2,2,6,6-Tetramethyl-4-amino-piperidin, Hexamethylen-Bis-(4-Amino-2,2,6,6-tetramethylpiperidin), N-Butyl-4-Amino-2,2,6,6-tetramethylpiperidin, N,N-Dimethylaminopropyl-4-Amino-2,2,6,6-tetramethylpiperidin, N-Propyl-4-Amino-2,2,6,6-tetramethylpiperidin, N-Isopropyl-4-Amino-2,2,6,6-tetramethylpiperidin, N-Hydroxyethyl-4-Amino-2,2,6,6-tetramethylpiperidin, N-Methoxyethyl-4-Amino-2,2,6,6-tetramethylpiperidin, N-Methoxyethyl-4-Amino-2,2,6,6-tetramethylpiperidin, N',N'-Dimethylaminoethyl-4-Amino-2,2,6,6-tetramethylpiperidin, N-Morpholinoethyl-4-Amino-2,2,6,6-tetramethylpiperidin, N-Piperazinoethyl-4-Amino-2,2,6,6-tetramethylpiperidin, 4-Morpholino-2,2,6,6-tetramethylpiperidin enthalten sind.

5. Epoxidharz-Zusammensetzung nach mindestens einem der vorherigen Ansprüche, **dadurch gekennzeichnet, dass** die Verbindungen B2) mindestens 2 reaktive funktionelle Gruppen aufweisen ausgewählt aus den folgenden reaktiven Gruppen: OH-, NH2-, NH-, SH-, NCO-Gruppen.

6. Epoxidharz-Zusammensetzung nach mindestens einem der vorherigen Ansprüche, **dadurch gekennzeichnet, dass** Di- und/oder Polyamine B2) ausgewählt aus primären und/oder sekundären Di- und/oder Polyaminen, enthalten sind.

7. Epoxidharz-Zusammensetzung nach mindestens einem der vorherigen Ansprüche, **dadurch gekennzeichnet, dass** als Komponente B2)

a) Isophorondiamin,

b) und/oder eine Kombination aus Isophorondiamin und einer Mischung der Isomeren aus 2,2,4-Trimethylhexamethylendiamin und 2,4,4-Trimethylhexamethylendiamin, und/oder 4,4'-Diaminodicyclohexylmethan, 2,4'-Diaminodicyclohexylmethan, 2,2'-Diaminodicyclohexylmethan, allein oder in Mischungen der Isomeren,

c) und/oder Addukthärter auf Basis der Umsetzungsprodukte von Epoxidverbindungen

und den vorgenannten Aminen B2) oder Kombination von vorgenannten Aminen B2), eingesetzt wird.

8. Epoxidharz-Zusammensetzung nach mindestens einem der vorherigen Ansprüche, **dadurch gekennzeichnet, dass** als Härtungsbeschleuniger C) Imidazol und/oder Imidazol-Derivate enthalten sind.

9. Verwendung einer Epoxidharz-Zusammensetzung nach mindestens einem der vorherigen Ansprüche zur Herstellung von lagerstabilen Composites.

**10.** Lagerstabile Composites,
im Wesentlichen aufgebaut aus

1) mindestens einem Faser förmigen Träger
und
2) einer Epoxidharz-Zusammensetzung nach einem der Ansprüche 1-8

**11.** Verfahren zur Herstellung von lagerstabilen Composites durch die Verfahrensschritte:

I. Bereitstellung einer Epoxidharz-Zusammensetzung nach einem der Ansprüche 1-8,
II. Imprägnierung eines faserförmigen Trägers mit der Zusammensetzung aus I,
III. Umsetzung der Epoxidharz-Zusammensetzung aus I bei Temperaturen von 23-200°C auf einen Umsatz von 1-90 %,
IV. Abwickeln oder Ablegen des lagerstabilen Composite.

**12.** Lagerstabile Prepregs oder lagerstabile SMC Composites (Sheet Moulding Compound), im Wesentlichen aufgebaut aus

1) mindestens einem Faser förmigen Träger
und
2) einer Epoxidharz-Zusammensetzung nach einem der Ansprüche 1-8.

**13.** Verfahren zur Herstellung von lagerstabile SMC Composites durch die Verfahrensschritte:

I. Bereitstellung einer Epoxidharz-Zusammensetzung nach einem der Ansprüche 1-8
II. Imprägnierung eines faserförmigen Trägers mit der Zusammensetzung aus I,
III. Umsetzung der Epoxidharz-Zusammensetzung aus I bei Temperaturen von 23-200°C auf einen Umsatz von 1-90 %,
IV. Ablegen der reaktiven SMC Composites.

**14.** Verfahren zur Herstellung von lagerstabile Prepregs durch die Verfahrensschritte:

I. Bereitstellung einer Epoxidharz-Zusammensetzung nach einem der Ansprüche 1-8
II. Imprägnierung eines faserförmigen Trägers mit der Zusammensetzung aus I,
III. Umsetzung der Epoxidharz-Zusammensetzung aus I bei Temperaturen von 23-200°C auf einen Umsatz von 1-90 %,
IV. Ablegen des reaktiven Prepregs.

**15.** Composite-Bauteile, aufgebaut aus mindestens einem faserförmigen Träger und mindestens einer vernetzten Epoxidharz-Zusammensetzung nach einem der Ansprüche 1-8

**Claims**

**1.** Epoxy resin composition comprising:

A) at least one epoxy compound
and
B) a hardener composition consisting of:

B1) 65%-99% of at least one polyamine based on triacetonediamine
and
B2) 1%-35% of at least one compound having at
least one functional group reactive toward epoxy groups in component A)
selected from
isophoronediamine, 4,4'-diaminodicyclohexylmethane, 2,4'-diaminodicyclohexylmethane, 2,2'-diaminodicyclohexylmethane, alone or in mixtures of the isomers,
a mixture of the isomers of 2,2,4-trimethylhexamethylenediamine and 2,4,4-trimethylhexamethylenediamine,
adduct hardeners based on the reaction products of epoxy compounds and di- and/or polyamines B2) or
a combination of the aforementioned di- and/or polyamines B2),

where the stoichiometric ratio of the epoxy groups of A) and the number of active hydrogen atoms of the functional
groups of B) varies from 1:2 to 2:1,
C) 0.1%-10% by weight of at least one curing accelerator,
where the amounts of A)-C) add up to 100% by weight,
D) optionally additives.

2.  Epoxy resin composition according to Claim 1, **characterized in that** epoxy compounds A) selected from saturated,
    unsaturated, aliphatic, cycloaliphatic, aromatic and heterocyclic epoxy compounds are present, and these may also
    have hydroxyl groups.

3.  Epoxy resin composition according to at least one of the preceding claims, **characterized in that** epoxy compounds
    A) selected from glycidyl ethers, glycidyl esters, aliphatic epoxides, diglycidyl ethers based on bisphenol A and/or
    bisphenol F, glycidyl methacrylates are present.

4.  Epoxy resin composition according to at least one of the preceding claims, **characterized in that** polyamines based
    on triacetonediamine B1) selected from 2,2,6,6-tetramethyl-4-aminopiperidine, hexamethylenebis(4-amino-2,2,6,6-
    tetramethylpiperidine), N-butyl-4-amino-2,2,6,6-tetramethylpiperidine, N,N-dimethylaminopropyl-4-amino-2,2,6,6-
    tetramethylpiperidine, N-propyl-4-amino-2,2,6,6-tetramethylpiperidine, N-isopropyl-4-amino-2,2,6,6-tetramethylpiperidine, N-hydroxyethyl-4-amino-2,2,6,6-tetramethylpiperidine, N-methoxyethyl-4-amino-2,2,6,6-tetramethylpiperidine, N-methoxyethyl-4-amino-2,2,6,6-tetramethylpiperidine, N',N'-dimethylaminoethyl-4-amino-2,2,6,6-tetramethylpiperidine, N-morpholinoethyl-4-amino-2,2,6,6-tetramethylpiperidine, N-piperazinoethyl-4-amino-2,2,6,6-
    tetramethylpiperidine, 4-morpholino-2,2,6,6-tetramethylpiperidine are present.

5.  Epoxy resin composition according to at least one of the preceding claims, **characterized in that** the compounds
    B2) have at least 2 reactive functional groups selected from the following reactive groups: OH-, NH2-, NH-, SH-,
    NCO- groups.

6.  Epoxy resin composition according to at least one of the preceding claims, **characterized in that** di- and/or
    polyamines B2) selected from primary and/or secondary di- and/or polyamines are present.

7.  Epoxy resin composition according to at least one of the preceding claims, **characterized in that** the following are
    used as component B2):

    a) isophoronediamine,
    b) and/or a combination of isophoronediamine and a mixture of the isomers of 2,2,4-trimethylhexamethylenediamine and 2,4,4-trimethylhexamethylenediamine, and/or 4,4'-diaminodicyclohexylmethane, 2,4'-diaminodicyclohexylmethane, 2,2'-diaminodicyclohexylmethane, alone or in mixtures of the isomers,
    c) and/or adduct hardeners based on the reaction products of epoxy compounds and the aforementioned amines
    B2) or combination of the aforementioned amines B2).

8.  Epoxy resin composition according to at least one of the preceding claims, **characterized in that** imidazole and/or
    imidazole derivatives are present as curing accelerators C).

9.  Use of an epoxy resin composition according to at least one of the preceding claims, for production of storage-stable
    composites.

10. Storage-stable composites,
    formed essentially from

    1) at least one fibrous carrier
    and
    2) an epoxy resin composition according to any of Claims 1-8.

11. Process for producing storage-stable composites by the process steps of:

I. providing an epoxy resin composition according to any of Claims 1-8,
II. impregnating a fibrous carrier with the composition from I,
III. converting the epoxy resin composition from I at temperatures of 23-200°C to a conversion of 1%-90%,
IV. unwinding or laying out the storage-stable composite.

12. Storage-stable prepregs or storage-stable SMC (sheet moulding compound) composites, formed essentially from

1) at least one fibrous carrier
and
2) an epoxy resin composition according to any of Claims 1-8.

13. Process for producing storage-stable SMC composites by the process steps of:

I. providing an epoxy resin composition according to any of Claims 1-8,
II. impregnating a fibrous carrier with the composition from I,
III. converting the epoxy resin composition from I at temperatures of 23-200°C to a conversion of 1%-90%,
IV. laying out the reactive SMC composites.

14. Process for producing storage-stable prepregs by the process steps of:

I. providing an epoxy resin composition according to any of Claims 1 to 8,
II. impregnating a fibrous carrier with the composition from I,
III. converting the epoxy resin composition from I at temperatures of 23-200°C to a conversion of 1%-90%,
IV. laying out the reactive prepreg.

15. Composite components formed from at least one fibrous carrier and at least one crosslinked epoxy resin composition according to any of Claims 1-8.

**Revendications**

1. Composition de résine époxy contenant :

A) au moins un composé époxy
et
B) une composition de durcisseur constituée de :

B1) 65-99% d'au moins une polyamine à base de triacétone diamine et
B2) 1-35% d'au moins un composé pourvu d'au moins un groupe fonctionnel réactif vis-à-vis des groupes époxy du composant A) choisi parmi l'isophorone diamine,
le 4,4'-diaminodicyclohexylméthane, le 2,4'-diaminodicyclohexylméthane, le 2,2'-diaminodicyclohexylméthane, seuls ou en mélanges des isomères, un mélange des isomères de la 2,2,4-triméthylhexaméthylènediamine et de la 2,4,4-triméthylhexaméthylènediamine,
des durcisseurs par réaction d'addition à base des produits de transformation de composés époxy et de diamines et/ou de polyamines B2) ou une combinaison desdites diamines et/ou desdites polyamines B2),
le rapport stoechiométrique des groupes époxy de A) au nombre d'atomes d'hydrogène actifs des groupes fonctionnels de B) variant de 1 à 2 jusqu'à 2 à 1,

C) 0,1-10% en poids d'au moins un accélérateur de durcissement,
la somme des quantités de A)-C) étant de 100% en poids,
D) éventuellement des additifs.

2. Composition de résine époxy selon la revendication 1, **caractérisée en ce que** les composés époxy A) sont choisis parmi les composés époxy saturés, insaturés, aliphatiques, cycloaliphatiques, aromatiques ou hétérocycliques et ces composés époxy peuvent également comprendre des groupes hydroxyles.

3. Composition de résine époxy selon au moins l'une quelconque des revendications précédentes, **caractérisée en ce que** les composés époxy A) sont choisis parmi les glycidyléthers, les esters glycidyliques, les époxydes aliphatiques, les diglycidyléthers à base de bisphénol A et/ou à base de bisphénol F et les méthacrylates de glycidyle.

4. Composition de résine époxy selon au moins l'une quelconque des revendications précédentes, **caractérisée en ce que** les polyamines à base de triacétone diamine B1) sont choisies parmi la 2,2,6,6-tétraméthyl-4-aminopipéridine, l'hexaméthylène-bis(4-amino-2,2,6,6-tétraméthylpipéridine), la *N*-butyl-4-amino-2,2,6,6-tétraméthylpipéridine, la *N,N*-diméthylaminopropyl-4-amino-2,2,6,6-tétraméthylpipéridine, la *N*-propyl-4-amino-2,2,6,6-tétraméthylpipéridine, la *N*-isopropyl-4-amino-2,2,6,6-tétraméthylpipéridine, la *N*-hydroxyéthyl-4-amino-2,2,6,6-tétraméthylpipéridine, la *N*-méthoxyéthyl-4-amino-2,2,6,6-tétraméthylpipéridine, la *N*-méthoxyéthyl-4-amino-2,2,6,6-tétraméthylpipéridine, la *N',N'*-diméthylaminoéthyl-4-amino-2,2,6,6-tétraméthylpipéridine, la *N*-morpholinoéthyl-4-amino-2,2,6,6-tétraméthylpipéridine, la *N*-pipérazinoéthyl-4-amino-2,2,6,6-tétraméthylpipéridine et la 4-morpholino-2,2,6,6-tétraméthylpipéridine.

5. Composition de résine époxy selon au moins l'une quelconque des revendications précédentes, **caractérisée en ce que** les composés B2) comprennent au moins 2 groupes fonctionnels réactifs choisis parmi les groupes fonctionnels réactifs suivants : groupes OH-, NH2-, NH-, SH-, NCO-.

6. Composition de résine époxy selon au moins l'une quelconque des revendications précédentes, **caractérisée en ce que** les diamines et/ou les polyamines B2) sont choisies parmi les diamines primaires et/ou secondaires et/ou les polyamines primaires et/ou secondaires.

7. Composition de résine époxy selon au moins l'une quelconque des revendications précédentes, **caractérisée en ce que**, en tant que composant B2) on utilise

   a) l'isophorone diamine,
   b) et/ou une combinaison d'isophorone diamine et d'un mélange des isomères de la 2,2,4-triméthylhexaméthylènediamine et de la 2,4,4-triméthylhexaméthylènediamine et/ou de 4,4'-diaminodicyclohexylméthane, du 2,4'-diaminodicyclohexylméthane, du 2,2'-diaminodicyclohexylméthane, seuls ou en mélange des isomères,
   c) et/ou des durcisseurs par réaction d'addition à base des produits de transformation des composés époxy et desdites amines B2) ou d'une combinaison desdites amines B2).

8. Composition de résine époxy selon au moins l'une quelconque des revendications précédentes, **caractérisée en ce que** de l'imidazole et/ou des dérivés d'imidazole est/sont contenu(s) comme accélérateur de durcissement C).

9. Utilisation d'une composition de résine époxy selon au moins l'une quelconque des revendications précédentes pour la fabrication de composites stables au stockage.

10. Composites stables au stockage, essentiellement constitués de

    1) au moins un support en forme de fibre et
    2) une composition de résine époxy selon l'une quelconque des revendications 1-8.

11. Procédé de fabrication de composites stables au stockage selon les étapes de :

    I. mise à disposition d'une composition de résine époxy selon l'une quelconque des revendications 1-8,
    II. imprégnation d'un support en forme de fibre avec la composition de l'étape I,
    III. transformation de la composition de résine époxy de l'étape I à des températures de 23-200°C jusqu'à une conversion de 1-90%,
    IV. enroulement ou stockage du composite stable au stockage.

12. Préimprégnés stables au stockage ou composites stables au stockage de type SMC (sheet moulding compounds-composés de moulage de feuille) essentiellement constitués de

    1) au moins un support en forme de fibre et
    2) une composition de résine époxy selon l'une quelconque des revendications 1-8.

13. Procédé de fabrication de composites stables au stockage de type SMC selon les étapes de :

    I. mise à disposition d'une composition de résine époxy selon l'une quelconque des revendications 1-8,

II. imprégnation d'un support en forme de fibre avec la composition de l'étape I,

III. transformation de la composition de résine époxy de l'étape I à des températures de 23-200°C jusqu'à une conversion de 1-90%,

IV. stockage des composites réactifs de type SMC.

14. Procédé de fabrication de préimprégnés stables au stockage selon les étapes de :

I. mise à disposition d'une composition de résine époxy selon l'une quelconque des revendications 1-8,

II. imprégnation d'un support en forme de fibre avec la composition de l'étape I,

III. transformation de la composition de résine époxy de l'étape I à des températures de 23-200°C jusqu'à une conversion de 1-90%,

IV. stockage du préimprégné réactif.

15. Pièces de composite, composées d'au moins un support en forme de fibre et d'au moins une composition de résine époxy réticulée selon l'une quelconque des revendications 1-8.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5508328 A
- WO 98022527 A
- WO 2014209601 A
- DE 2131929
- WO 2013059062 A
- WO 2014184012 A
- DE 2640408
- DE 2640409
- DE 2540410
- DE 2950067
- DE 3328134
- EP 675185 A
- EP 394495 A1
- US 4775733 A1
- WO 2007096425 A2
- DE OS2410513 A
- WO 2014184257 A1
- US 4859761 A
- EP 306451 A
- US 4436892 A
- US 4587311 A
- JP 743212 A
- US 3678007 A
- US 3677978 A
- US 3030247 A
- US 4283520 A
- US 4529821 A
- US 4550203 A
- US 4618712 A
- US 4694096 A
- US 3386955 A
- WO 9955772 A
- EP 669353 A
- US 7754322 B
- US 7968179 B
- US 8021752 B
- US 8470923 B

**In der Beschreibung aufgeführte Nicht-Patentliteratur**

- **A. M. PAQUIN.** Epoxidverbindungen und Epoxidharze. Springer Verlag, 1958
- **LEE NEVILLE.** Handbook of Epoxy Resins. 1967
- Epoxy Resins - Chemistry and Technology; Curing Agents and Modifiers. 1988, 482-487
- Epoxy Resins - Chemistry and Technology; Curing Agents and Modifiers. 1988, 481-482
- Methoden der Organischen Chemie (Houben-Weyl). Georg Thieme Verlag, 1963, vol. 14, 1-5, 21-23, 40-44
- **C. R. MARTENS ; ALKYD RESINS.** Reinhold Plastics Appl. Series. Reinhold Publishing Comp, 1961, 51-59
- **VAN LEEUWEN, BEN ; SC JOHNSON.** *Polymer, Neth. PPCJ, Polymers Paint Colour Journal,* 1997, vol. 187 (4392), 11-13
- **CHAKRABARTI, SUHAS.** Ray, Somnath. Berger Paints India Ltd, 2003, vol. 53, 33-34, 36, , 38-40
- **CHATTOPADHYAY, DIPAK K. ; NARAYAN, RAMANUJ ; RAJU, K. V. S. N.** Organic Coatings and Polymers Division. Indian Institute of Chemical Technology, 2001, vol. 51, 31-42
- **H. LEE ; K. NEVILLE.** Handbook of Epoxy Resins. McGraw-Hill, 1967
- **R. GÄCHTER ; H. MÜLLER.** Plastics Additives. Hanser Publishers, 1983
- Composites Technologien. Paolo Ermanni (Version 4). Script zur Vorlesung ETH Zürich, August 2007